(19) Europäisches Patentamt
European Patent Office
Office européen des brevets

(11) **EP 4 128 452 B1**

(12) **FASCICULE DE BREVET EUROPEEN**

(45) Date de publication et mention
de la délivrance du brevet:
**18.02.2026 Bulletin 2026/08**

(21) Numéro de dépôt: **21713947.6**

(22) Date de dépôt: **23.03.2021**

(51) Classification Internationale des Brevets (IPC):
**H01S 3/0933** *(2006.01)*    **H01S 3/16** *(2006.01)*
**H01S 3/08** *(2023.01)*    **H01S 3/06** *(2006.01)*
**H01S 3/0915** *(2006.01)*

(52) Classification Coopérative des Brevets (CPC):
**H01S 3/0604; H01S 3/08095; H01S 3/0915;**
**H01S 3/0933;** H01S 3/0606; H01S 3/1623;
H01S 3/1633; H01S 3/1648

(86) Numéro de dépôt international:
**PCT/EP2021/057467**

(87) Numéro de publication internationale:
**WO 2021/191221 (30.09.2021 Gazette 2021/39)**

(54) **DISPOSITIF DE POMPAGE LASER EN T**

T-FÖRMIGE LASERPUMPVORRICHTUNG

T-SHAPED LASER PUMPING DEVICE

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **24.03.2020 FR 2002852**
**15.01.2021 FR 2100384**

(43) Date de publication de la demande:
**08.02.2023 Bulletin 2023/06**

(73) Titulaires:
• **Centre national de la recherche scientifique**
**75016 Paris (FR)**
• **Institut Optique Théorique Appliquée**
**91127 Palaiseau Cedex (FR)**
• **Université Paris-Saclay**
**91190 Gif-sur-Yvette (FR)**

(72) Inventeurs:
• **BALEMBOIS, François**
**91870 Boissy-le-Sec (FR)**
• **PICHON, Pierre**
**91120 Palaiseau (FR)**

(74) Mandataire: **IPAZ**
**Bâtiment Platon**
**Parc Les Algorithmes**
**91190 Saint-Aubin (FR)**

(56) Documents cités:
**FR-A1- 3 045 965    FR-B1- 3 045 965**

• **ADRIEN BARBET ET AL: "Light-emitting diode**
**pumped luminescent concentrators: a new**
**opportunity for low-cost solid-state lasers",**
**OPTICA, vol. 3, no. 5, 2 May 2016 (2016-05-02),**
**pages 465, XP055648887, DOI: 10.1364/**
**OPTICA.3.000465**
• **PIERRE PICHON ET AL: "Light-emitting diodes: a**
**new paradigm for Ti:sapphire pumping",**
**OPTICA, vol. 5, no. 10, 20 October 2018**
**(2018-10-20), pages 1236, XP055750262, DOI:**
**10.1364/OPTICA.5.001236**
• **PICHON PIERRE ET AL: "LED-pumped**
**Alexandrite laser oscillator and amplifier",**
**PROCEEDINGS OF SPIE; [PROCEEDINGS OF**
**SPIE ISSN 0277-786X VOLUME 10524], SPIE, US,**
**vol. 10511, 15 February 2018 (2018-02-15), pages**
**105111J - 105111J, XP060100090, ISBN:**
**978-1-5106-1533-5, DOI: 10.1117/12.2287808**

EP 4 128 452 B1

**Description**

**Domaine technique** :

La présente invention concerne le domaine des dispositifs lasers pompés par diodes électroluminescentes (LED), et plus particulièrement celui des dispositifs lasers pompés par diodes électroluminescentes utilisant des concentrateurs luminescents.

**Technique antérieure :**

Le développement de diodes électroluminescentes (LED) émettant dans le visible présente un fort intérêt pour le pompage de nouvelles sources laser de faible coût, très robustes. Cependant, la densité de puissance des LED ne dépasse pas 4W/mm$^2$ en régime impulsionnel ($\mu$s) et 1W/mm$^2$ en régime continu. Ces valeurs sont insuffisantes pour pomper certains milieux lasers comme par exemple les lasers à transition métalliques (alexandrite, Cr:LiSAF ou saphir dopé au titane).

Une solution pour augmenter l'intensité lumineuse est d'utiliser des concentrateurs de lumière pompés par LED (voir par exemple Barbet, Adrien, et al. "Light-emitting diode pumped luminescent concentrators: a new opportunity for low-cost solid-state lasers." Optica 3.5 (2016): 465-468.). Ce concentrateur est, par exemple, un cristal fluorescent dans le visible (rouge-orange) comme le Ce:YAG qui absorbe dans le bleu (vers 450 nm), à une longueur d'onde où les LED sont très performantes. Le cristal est taillé sous la forme d'un plan, tapissé par des centaines (voire des milliers) de LED sur les deux grandes surfaces et avec une émission par les tranches. Il est également fait référence aux documents suivants :

- FR 3 045 965 B1 (EFFILUX [FR]; INST DOPTIQUE) 11 mai 2018
- PIERRE PICHON: "Light-emitting diodes: a new paradigm for Ti:sapphire pumping", OPTICA, vol. 5, no. 10, 20 octobre 2018, page 1236
- PICHON PIERRE ET AL: "LED-pumped Alexandrite laser oscillator and amplifier", PROCEEDINGS OF SPIE, vol. 10511, 15 février 2018, pages 105111J-105111J.

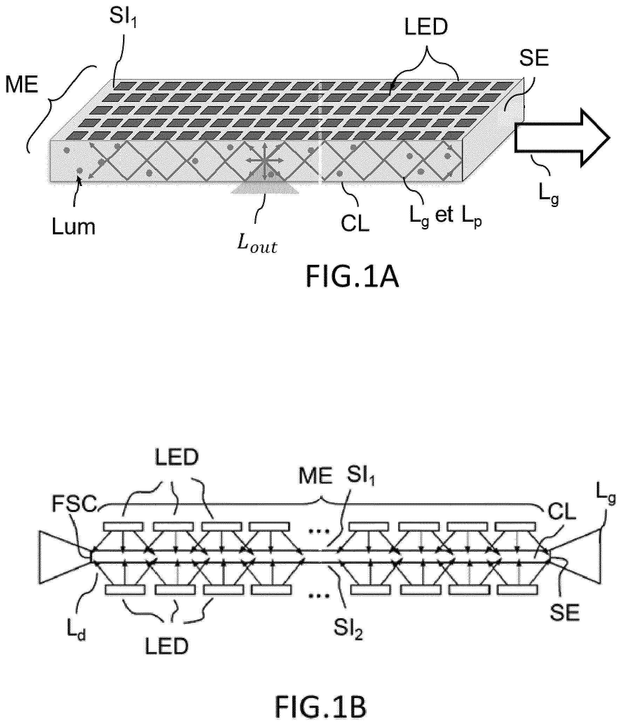

Les figures 1A et 1B illustrent un exemple de module d'émission ME connu de l'art antérieur et adapté au pompage d'un milieu laser Las, non représenté dans ces figures. Les figures 1A et 1B représentent, de façon schématique, des vue respectivement en perspective et de côté d'un même module d'émission ME. Le module d'émission ME comprend un ensemble de LED destinées à émettre dans une première bande spectrale et un concentrateur de lumière CL. Le concentrateur CL est un cristal parallélépipédique fluorescent, présentant au moins une face d'éclairement SI$_1$, SI$_2$ illuminée par le rayonnement électroluminescent L$_d$ émis par les LED.

Le cristal du concentrateur est configuré pour absorber ledit rayonnement électroluminescent L$_d$. Le flux lumineux émis par les LED et dirigé vers la face d'éclairement est absorbé par les luminophores Lum du cristal fluorescent qui sont répartis dans l'ensemble du volume du cristal et qui émettent alors un rayonnement de fluorescence à l'intérieur du cristal. Les rayons émis peuvent être classés en trois catégories :

- les rayons piégés notés L$_p$ : ces rayons sont piégés dans le cristal du fait de la réflexion totale interne (RTI) sur les différentes faces du cristal. Ces rayons existent si le cristal est un parallélépipède doté de 6 faces parallèles deux à deux et perpendiculaires entre elles. Les rayons piégés ne sortent jamais du cristal, aux imperfections près de ce dernier.

- les rayons non piégés sont les rayons qui finissent par sortir du cristal. Ils se séparent en deux catégories : les rayons guidés notés L$_g$ dont la caractéristique est d'être guidés par RTI et de sortir sur l'une des faces du concentrateur et les rayons non guidés notés L$_{out}$ qui sortent directement du concentrateur sans se réfléchir sur les faces.

Bien que l'augmentation d'éclairement à l'aide d'un concentrateur soit très significative par rapport à des LED, l'éclairement reste faible par rapport à l'éclairement fourni par des diodes lasers par exemple. Ceci rend le pompage longitudinal très difficile pour un concentrateur. En revanche le pompage transverse est possible comme montré dans l'article de Barbet et al. De plus, le rayonnement émis par un concentrateur est très divergent. Ceci rend l'utilisation de tout système optique de couplage peu efficace et donc oriente vers une géométrie où le concentrateur est très proche du cristal à pomper, sans optique intermédiaire.

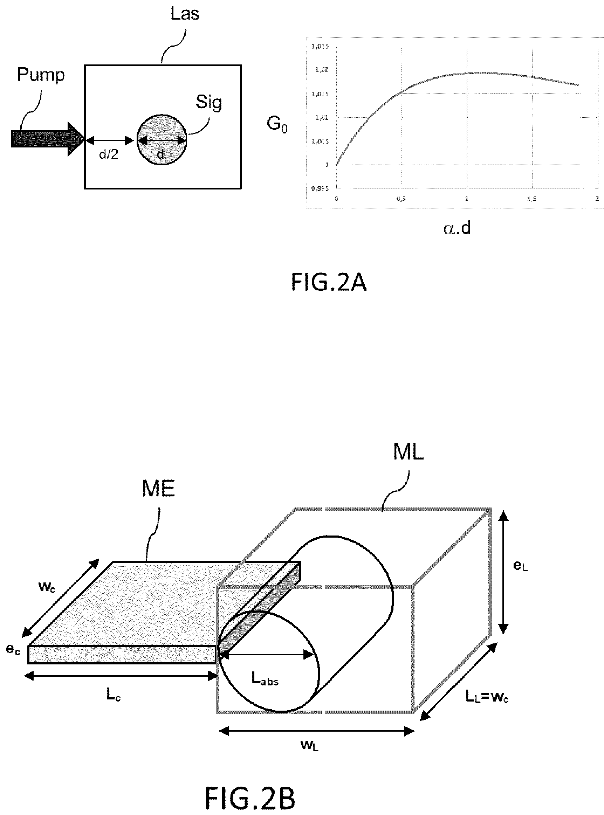

Dans un pompage transverse classique (par lampe flash ou par diode laser), un faisceau dit de pompe Pump, illumine un milieu laser Las avec une direction de propagation moyenne perpendiculaire à la direction de propagation du faisceau laser Sig (voir figure 2A partie gauche). Ce milieu laser Las présente une bande spectrale d'absorption et un coefficient d'absorption $\alpha$ associé. Dès son entrée dans le milieu laser Las, le faisceau de pompe Pump subit une absorption exponentielle avec une transmission de la forme T=e$^{-\alpha L}$ où $\alpha$ est le coefficient d'absorption. Dans le cas d'un pompage optique avec une seule source de lumière, il faut que le volume du faisceau laser à amplifier coïncide au mieux avec la zone où l'absorption est présente. Cependant il est difficile d'approcher le faisceau laser de l'endroit où l'absorption est la plus forte. En effet, les effets bien connus de diffraction sur le bord du cristal (côté pompe) vont créer des pertes et des déformations pour le faisceau laser. En supposant que le faisceau laser Sig est cylindrique et que son diamètre dans le milieu laser est d, il est difficile d'approcher le faisceau laser Sig à moins d'une distance d/2 de la surface d'entrée du pompage. Dans le cas d'un faisceau de pompe collimaté, un calcul simple montre que pour une valeur d fixée, le gain du laser G$_0$ moyenné sur le faisceau a l'allure décrite par la courbe de la partie droite de la figure 2A. Il atteint une valeur maximale pour un produit $\alpha$. $d$ = 1. Ceci revient à dire que la longueur d'absorption, L$_{abs}$=1/$\alpha$, doit être égale au diamètre d du faisceau, dans le cas d'un pompage transverse. Ainsi, plus le faisceau laser a un diamètre d important moins un cristal laser devra absorber. Plus il faudra positionner le faisceau signal Sig loin du bord du cristal (idéalement à d/2) et plus le gain sera faible. Ce point est particulièrement problématique pour des faisceaux énergétiques qui peuvent dépasser le seuil de dommage optique de la face d'entrée du cristal laser. Il est dans ce cas nécessaire de travailler avec des faisceaux de grande surface, jusqu'à quelques centimètres de diamètre.

Une première façon d'utiliser les concentrateurs serait de positionner un concentrateur ME au plus proche d'un milieu laser ML et de réaliser un pompage transverse de la même façon que d'autres sources de lumière sont utilisées pour ce type de pompage (comme sur la figure 2A). On considère pour cela un ensemble de pompage "laser + concentrateur" adapté pour réaliser un pompage transverse dont les dimensions sont notées (voir figure 2B) :

- pour le concentrateur ME : e$_c$ pour l'épaisseur, w$_c$ pour la largeur et L$_c$ pour la longueur du concentrateur ;

- pour le milieu laser ML : e$_L$ pour l'épaisseur, w$_L$ pour la largeur et L$_L$ pour la longueur (qui est parallèle à l'axe de propagation du faisceau laser).

Dans l'exemple illustré, les deux milieux sont adaptés, c'est-à-dire que la largeur du concentrateur est égale à la longueur du milieu laser : w$_c$=L$_L$. Le concentrateur est approché contre le milieu laser pour permettre un bon couplage de la lumière de pompe dans le milieu laser. En sortie d'un concentrateur pompé par LED, le faisceau diverge fortement. Dans un cas classique comme par exemple des barettes de diodes laser placées à proximité du milieu laser, avec un milieu laser plus épais que le concentrateur (e$_L$ >ec), dans lequel les rayons de pompe sont absorbés avant de toucher les bords du milieu laser, le volume de pompage sera de l'ordre de $\pi/4. \mathrm{L}_{abs}^2. \mathrm{w}_c$ . La lumière de pompage sera donc diluée dans le milieu laser, ce qui n'est pas favorable à un gain élevé noté $G_0$ qui dépend de la densité volumique d'inversion de population notée $\Delta n_0$. On rappelle que ces deux grandeurs sont liées par la formule suivante : $G_0 = exp(\sigma \Delta n_0 L_L)$. Dans les dispositifs de l'art antérieur, la densité volumique de puissance de pompe est donc conditionnée par le volume du milieu laser dont les dimensions transverses au faisceau laser doivent être suffisantes pour permettre une absorption du faisceau de pompe avant que celui-ci ne ressorte du milieu laser.

L'invention vise à pallier certains problèmes de l'art antérieur. Elle consiste à utiliser le rayonnement très particulier des rayons piégés dans le concentrateur en combinaison avec un cristal laser de forme adaptée, réduisant fortement le volume de pompe. Plus précisément, l'invention vise à réaliser un ensemble laser comprenant un module d'émission comprenant un concentrateur de lumière pompant de manière transverse un milieu laser configuré pour augmenter la densité volumique de puissance de pompe et ainsi permettre d'amplifier des faisceaux lasers plus fortement que l'art antérieure.

**Résumé de l'invention :**

A cet effet, un objet de l'invention est un ensemble de pompage laser comprenant :

- un milieu laser solide parallélépipédique présentant une forme de plaque selon un plan horizontal et une épaisseur *e$_L$*, ledit milieu laser présentant une bande spectrale d'absorption et un coefficient d'absorption $\alpha$ associé ;

- au moins un module d'émission de lumière destiné au pompage du milieu laser comprenant :

  - une pluralité de diodes électroluminescentes configurées pour émettre un rayonnement électroluminescent à une longueur d'onde $\lambda_d$ ;
  - un cristal parallélépipédique fluorescent dit concentrateur, présentant une forme de plaque d'épaisseur *e$_c$*,ledit concentrateur présentant au moins une face d'éclairement illuminée par ledit rayonnement électroluminescent et étant configuré pour absorber ledit rayonnement électroluminescent et émettre un rayonnement de fluorescence dans une gamme spectrale présentant un recouvrement avec ladite bande spectrale d'absorption, ledit concentrateur présentant une face émettrice présentant des dimensions $e_c \times w_c$, $w_c$ étant une largeur du concentrateur;

ledit concentrateur étant en contact optique par ladite face émettrice à une face réceptrice du milieu laser, ledit concentrateur étant disposé perpendiculairement au milieu laser de telle sorte que la ou les faces d'éclairement soient perpendiculaires à ladite face réceptrice de manière à réaliser un pompage transverse dudit milieu laser, le contact optique étant adapté pour qu'une portion dudit rayonnement de fluorescence piégée dans le concentrateur par réflexion totale interne puisse passer dans le milieu laser (en traversant ladite face émettrice, et être piégée dans le milieu laser par réflexion totale interne, ladite épaisseur $e^L$ du milieu laser telle que $e_L \leq L_{abs}/10$ avec $L_{abs} = 1/\alpha$ une longueur d'absorption du milieu laser.

Selon des modes particuliers de l'invention :

- un rapport entre une surface de la face réceptrice du milieu laser et une surface de la face émettrice du concentrateur est supérieur à 5, et dans lequel un rapport entre une surface de la face d'éclairement du concentrateur et une surface de la face émettrice du concentrateur est supérieur ou égal à 100 ;

- l'ensemble de pompage laser comprend moins un premier miroir de recyclage accolé à une face de sortie du concentrateur, opposée à ladite face émettrice et/ou un deuxième miroir de recyclage accolé à une face du milieu laser opposée à ladite face réceptrice ;

- un système laser comprend l'ensemble laser de pompage selon l'invention et au moins deux miroirs de cavité de manière à former une cavité laser dans laquelle est disposée l'ensemble, un faisceau laser se propageant dans ledit milieu laser selon une direction de propagation, en traversant deux faces opposées dites faces lasers présentant chacune des dimensions $e_L \times w_L$, $w_L$ étant dénommé dimension transverse, et au moins un module d'émission réalisant un pompage transverse du milieu laser ;

- la cavité laser est configurée pour qu'une dimension horizontale du faisceau laser $w_a$ et une dimension verticale $w_b$ sur chaque face laser soit inférieure à, respectivement la moitié de la dimension transverse de la face laser et la moitié de la dimension horizontale de la face laser, telle que $w_b \leq w_L/2$ dans le plan horizontal et $w_a \leq e_L/2$ dans le plan vertical ;

- la cavité laser est configurée pour que la direction de propagation du faisceau laser dans le milieu laser soit parallèle au concentrateur et pour que la propagation du faisceau laser s'effectue en dessous du concentrateur, ladite largeur $w_c$ du concentrateur étant égale à une longueur $L_L$ du milieu laser de manière à ce que le faisceau laser soit amplifié sur la totalité de sa propagation dans le milieu laser ;

- le système laser comprend un premier et un deuxième de prisme de couplage accolés respectivement à une face laser, lesdits prismes étant configurés pour dévier ledit faisceau laser de manière à ce que celui-ci soit guidé par réflexion totale interne dans ledit milieu laser sur la face réceptrice et une face opposée à ladite face réceptrice, la cavité étant adaptée pour qu'une dimension verticale du faisceau laser $w_a$ soit telle que $w_a \leq e_L sin\theta_v$, avec $\theta_v$ un angle d'incidence du faisceau laser sur ladite face réceptrice ;

- le système laser comprend une pluralité de module d'émission accolées la face réceptrice du milieu laser ;

- la pluralité de module d'émission accolées la face réceptrice du milieu laser est constituée d'un premier et d'un deuxième module d'émission disposés côte à côte et sensiblement parallèle entre eux, ledit système comprenant en outre un système de refroidissement des LED disposé entre le premier et le deuxième module d'émission, le faisceau laser se propageant parallèlement et en dessous des concentrateurs du premier et du deuxième module d'émission, de manière à ce que le faisceau laser soit amplifié dans une région pompée simultanément par le premier et le deuxième module d'émission, le système de refroidissement étant constitué de matériaux métalliques ou des matériaux transparents de qualité optique

- le système laser comprend :

  - une première pluralité de modules d'émission, parallèles entre eux, placés en vis-à-vis et accolés à une première face réceptrice du milieu laser,

  - une deuxième pluralité de modules d'émission, parallèles entre eux, placés en vis-à-vis et accolés à une deuxième face réceptrice du milieu laser,

- les modules de la première pluralité et de la deuxième pluralité étant en outre sensiblement parallèles entre eux, la direction de propagation du faisceau laser étant perpendiculaire aux modules d'émission,

- les modules de la première pluralité et de la deuxième pluralité étant agencés en quinconce.

- la cavité laser est adaptée pour que le faisceau laser se propage dans une pluralité de régions différentes du milieu laser, une pluralité de modules d'émission identiques étant disposés au-dessus de chaque région ;

- le système laser comprend :

  - un premier et un deuxième prismes accolés à respectivement une face laser, lesdits prismes étant adaptés pour dévier ledit faisceau laser de manière à ce qu'il soit guidé par réflexion totale interne dans ledit milieu laser sur deux faces dite tranches de dimensions $e_L \times L_L$ ;

  - un premier ensemble de modules d'émission préférentiellement identiques accolées la face réceptrice du milieu laser ; un deuxième ensemble de modules d'émission agencés au milieu laser dans le plan horizontal et accolés auxdites tranches, de manière à réaliser un pompage coplanaire du milieu laser,

  - une dimension horizontale du faisceau laser étant telle que $w_b \leq w_l sin\theta_h$, avec $\theta_h$ un angle d'incidence du faisceau incident sur lesdites tranches laser ;

  - les modules d'émission du deuxième ensemble sont placés sur lesdites tranches en correspondance de régions de réflexion du faisceau laser guidé dans ledit milieu laser ;

  - l'amplificateur laser comprend l'ensemble de pompage laser selon l'invention, au moins un module d'émission réalisant un pompage transverse du milieu laser, un faisceau laser étant incident sur ledit amplificateur laser et se propageant dans ledit milieu laser selon une direction de propagation, en traversant deux faces opposées dites faces lasers présentant chacune des dimensions $e_L \times w_L$.

## Brève description des figures :

D'autres caractéristiques, détails et avantages de l'invention ressortiront à la lecture de la description faite en référence aux dessins annexés donnés à titre d'exemple et qui représentent, respectivement :

[Fig.1A] et

[Fig.1B], une vue schématique d'un exemple de module d'émission connu de l'art antérieur,

[Fig.2A], une vue schématique d'un pompage transverse d'un milieu laser connu de l'art antérieur

[Fig.2B], une vue schématique d'un pompage transverse à l'aide d'un module d'émission utilisant un concentrateur, connu de l'art antérieur,

[Fig.3A], une vue schématique de l'ensemble de pompage laser selon l'invention,

[Fig.3B], une représentation schématique des rayons guidés dans le concentrateur,

[Fig.3C], une représentation des rayons piégés couplés dans le milieu laser en fonction de l'angle d'incidence.

[Fig.4], une représentation de l'efficacité optique du concentrateur en fonction de l'indice du concentrateur ($n_2$) et de l'indice du milieu de sortie ($n_3$),

[Fig.5], une vue schématique d'un ensemble laser selon l'invention,

[Fig.6A], une représentation schématique de trois configurations différentes de concentrateur et de milieu laser, dont une étant celle de l'invention,

[Fig.6B], une comparaison de l'éclairement obtenu dans le milieu laser pour deux des configurations différentes : une configuration de pompage coplanaire ($E_A$) et une configuration de pompage en T ($E_c$) correspondant à l'invention,

[Fig.6C], une comparaison du gain et du recouvrement pompe-signal des trois configurations différentes pour deux largeurs $w_l$ de milieu laser différentes dans le plan de la plaque laser.

[Fig.7A], l'éclairement obtenu dans le milieu laser dans l'ensemble de pompage l'invention en fonction de l'épaisseur du milieu laser, $e_{L1}$=0,5mm, $e_{L2}$=0,7mm, $e_{L3}$=1mm, $e_{L4}$=2mm, L'épaisseur du concentrateur est fixée à $e_c$=3mm.

[Fig.7B], une comparaison de la puissance de pompe absorbée dans le milieu laser dans l'ensemble de pompage de l'invention ($C_1$) et avec un faisceau de pompe collimaté sans rayons piégés (C2), en fonction de l'épaisseur du milieu laser.

[Fig.7C], l'éclairement obtenu dans le milieu laser dans l'ensemble de pompage de l'invention en fonction de l'épaisseur du concentrateur, $e_{c1}$=1mm, $e_{c2}$=2mm, $e_{C3}$=3mm. L'épaisseur de la plaque laser est fixée à $e_L$=1mm.

[Fig.7D], une comparaison de la puissance de pompe absorbée dans le milieu laser dans l'ensemble de pompage de l'invention ($C_1$) et avec un faisceau de pompe collimaté sans rayons piégés ($C_2$), en fonction du coefficient d'absorption du milieu laser,

[Fig.7E], une comparaison de la longueur moyenne de propagation d'un rayon de pompe $L_{moy}$ dans une configuration de pompage en T avec des rayons piégés et dans une configuration classique sans rayons piégés. La longueur d'absorption $L_{abs}$ est donnée à titre de comparaison.

[Fig.8], une vue schématique d'un système laser selon l'invention comprenant deux prismes de couplages (PR1 et PR2),

[Fig.9], une vue schématique d'un système laser selon l'invention comprenant deux miroirs de recyclage (MR1 et MR2),

[Fig.10], une vue schématique d'un système laser laser selon un autre mode de réalisation de l'invention,

[Fig.11], une vue schématique d'un système laser selon un autre mode de réalisation de l'invention

[Fig.12], une vue schématique d'un système laser selon un autre mode de réalisation de l'invention,

[Fig.13A] et [Fig.13B], deux vues schématiques d'un système laser selon un autre mode de réalisation de l'invention,

[Fig.14], une vue schématique d'un système laser selon un autre mode de réalisation de l'invention,

Dans les figures, sauf contre-indication, les éléments ne sont pas à l'échelle.

**Description détaillée :**

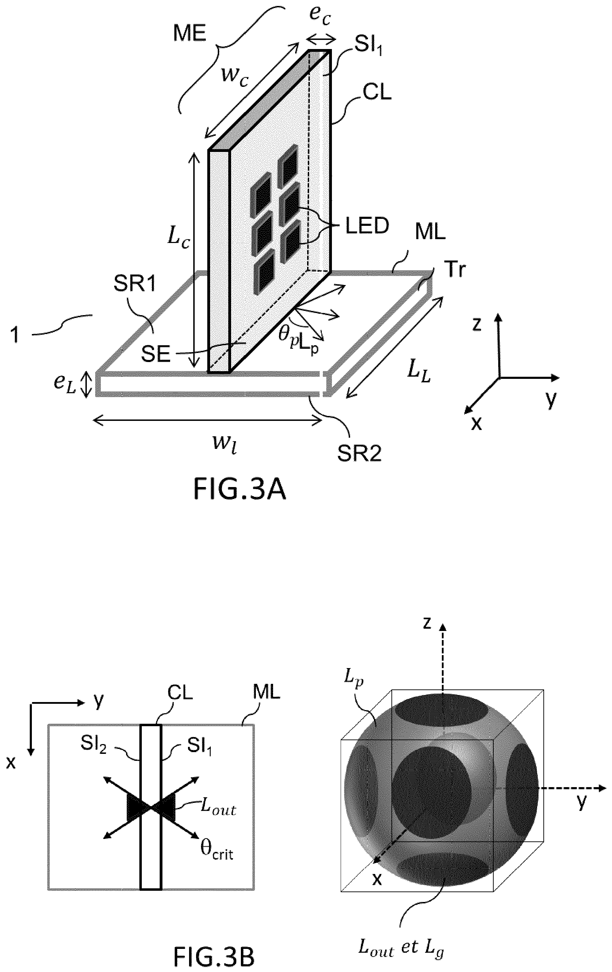

La figure 3A présente une vue schématique d'un ensemble de pompage laser 1 selon l'invention. L'ensemble de pompage laser comprend un milieu laser ML solide parallélépipédique présentant une forme de plaque selon un plan horizontal *xy.* Le milieu laser présente une bande spectrale d'absorption et un coefficient d'absorption $\alpha$ associé. De manière préférentielle, la bande spectrale d'absorption est dans le visible ou le proche infrarouge (entre 350nm et 950nm).
L'ensemble laser comprend de plus au moins un module d'émission de lumière ME destiné au pompage du milieu laser ML, identique à celui illustré en figures 1A et 1B. Ce module d'émission comprend une pluralité de diodes électroluminescentes LED configurées pour émettre un rayonnement électroluminescent $L_d$ à une longueur d'onde $\lambda_d$.
Le module d'émission comprend en outre un cristal parallélépipédique fluorescent dit concentrateur CL, présentant une forme de plaque d'épaisseur $e_c$, de largeur $w_c$ et de longueur $L_c$.
Le concentrateur CL présente au moins une face d'éclairement $SI_1$, $SI_2$ illuminée par le rayonnement électroluminescent $L_d$ provenant des LED. Les LED sont agencées de manière à former une matrice et de manière à optimiser le rapport entre la surface totale d'émission de la matrice de LED et chaque face d'éclairement SI1, SI2, du cristal fluorescent CL.
Le concentrateur est configuré pour absorber le rayonnement électroluminescent $L_d$ émis par les LED et pour émettre un rayonnement de fluorescence dans une gamme spectrale présentant un recouvrement avec la bande spectrale d'absorption du milieu laser. Comme précisé précédemment, le flux lumineux émis par les LED traversant la face d'éclairement est absorbé par les luminophores Lum du cristal fluorescent. Ces luminophores sont répartis dans l'ensemble du volume du cristal et se désexcitent en émettant de manière isotrope un rayonnement de fluorescence à l'intérieur du cristal de fluorescence.

Une portion dite piégée $L_p$ de ce rayonnement de fluorescence est piégée par RTI dans le concentrateur. Une deuxième portion est composée de lumière qui sort du concentrateur, avec une partie guidée vers les tranches $L_g$ et une partie qui sort directement $L_{out}$. La figure 3B représente une illustration des rayons piégés dans le concentrateur. A gauche une représentation du concentrateur en vue de dessus (plan xy) avec la représentation schématique du cône d'échappement des rayons non guidés par les faces d'éclairement $SI_1$ et $SI_2$. A droite une représentation du diagramme angulaire des rayons émis par le concentrateur. Les calottes sombres représentent les angles correspondant aux rayons non piégés (guidés et non guidés) et les zones claires représentent les angles correspondant aux rayons piégés, Dans cette représentation donnée à titre d'exemple, le milieu choisi comme cristal concentrateur CL est un cristal de Ce:YAG avec un angle critique de 33° (indice $n_2$=1,84).

Le pourcentage de rayonnement piégé par RTI par rapport au rayonnement non piégé est fixé par l'indice du cristal et celui du milieu ambiant par la loi de Snell-Descartes. Par exemple, dans un milieu d'indice 1,84 comme le YAG dans l'air, l'angle critique pour la sortie des rayons est de 33°, comme illustré figure 3B. 48% des rayons sortent par les 6 cônes d'échappement au travers des 6 faces ($L_{out}$ et $L_g$) et 52% des rayons restent piégés à l'intérieur de la structure ($L_p$).

De manière critique, les inventeurs ont réalisé après des simulations de tracés de rayons que le rayonnement de fluorescence piégé par RTI dans le concentrateur $L_p$ reste piégé tant que les 6 plans qui constituent les surfaces extérieures de la structure restent identiques et cela quelle que soit la forme de la structure. Ainsi, une structure d'indice constant, possédant 6 plans parallèles deux à deux finira par être uniformément remplie de lumière piégée.

Pour respecter cette configuration, une condition nécessaire est que le concentrateur CL du module d'émission ME soit disposé perpendiculairement au milieu laser ML, c'est à dire que les faces d'éclairement $SI_1$ $SI_2$ sont perpendiculaires à une face réceptrice SR, SR1, SR2 du milieu laser ML.

Le concentrateur CL est accolé par une face émettrice SE à une face réceptrice SR1, SR2 du milieu laser. Le contact entre la face émettrice SE et la face réceptrice SR est adapté pour que les rayons piégés dans le concentrateur CL puissent passer dans le milieu laser ML. Les rayons piégés passent intégralement dans le milieu laser ML si le concentrateur CL et le milieu laser ML sont contactés optiquement et si l'indice du milieu laser ML est supérieur ou égal à l'indice du concentrateur CL. Les rayons piégés passent partiellement dans le milieu laser ME si une colle d'indice différent des indices du milieu laser ML et du concentrateur CL est utilisée entre le milieu laser ML et le concentrateur CL.

Si les tranches Tr du milieu laser ML sont parallèles aux tranches Tr du concentrateur CL alors tous les rayons piégés dans le concentrateur CL qui passent dans le milieu laser ML sont aussi piégés dans le milieu laser ML. Cependant, cette condition n'est pas forcément utile pour assurer un bon confinement de la lumière de pompage. En effet, du fait de l'absorption dans le milieu laser ML, la lumière de pompe a peu de chance d'atteindre les tranches Tr avant d'être absorbée si les dimensions transverses de la plaque laser ($w_L$ et $L_L$) sont supérieures à $L_{abs}$. Ainsi la condition de perpendicularité du concentrateur CL par rapport à ML suffit à ce que les rayons de pompe soient confinés dans le milieu laser ML : par le piégeage RTI entre les faces SR1 SR2 et par absorption dans le plan du milieu laser ML: Le rayonnement de pompe piégé par RTI dans le milieu laser se propage dans ce dernier jusqu'à être absorbé. Ce point est très important car il implique que l'invention considère toutes les orientations possibles du concentrateur CL sur le milieu laser ML tant que les plans $SI_1$ $SI_2$ restent perpendiculaires au plan SR.

Les inventeurs ont exploité ce concept de confinement des rayons piégés dans le milieu laser ML afin d'augmenter fortement la densité volumique de puissance de pompe dans le milieu laser tout en réduisant fortement l'épaisseur du milieu laser.

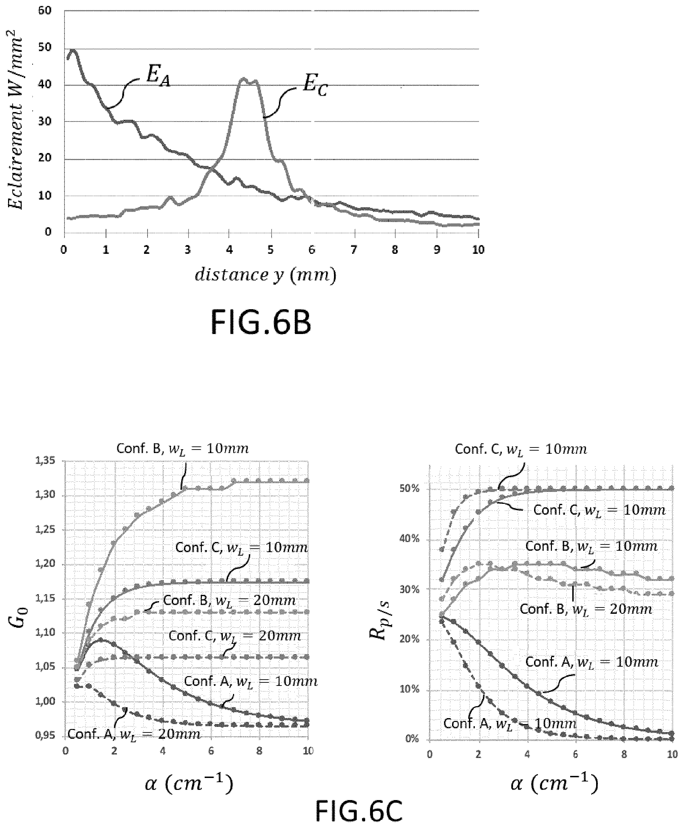

Ainsi, l'invention permet de choisir l'épaisseur du milieu laser telle que $e_L \ll L_{abs}$ avec $L_{abs} = 1/\alpha$ la longueur d'absorption du milieu laser. Ceci a pour effet de découpler l'absorption dans le milieu laser ML de sa dimension perpendiculaire à SE ($e_L$). Plus précisément, les inventeurs ont déterminé après de nombreuses simulations et expériences que lorsque l'épaisseur $e_L$ du milieu laser est telle que $e_L \leq L_{abs}/5$, et selon l'invention telle que revendiquée, $e_L \leq L_{abs}/10$, la densité volumique de puissance de pompe est suffisamment élevée. La validité de cette condition sera illustrée par des exemples dans les figures 6B à 14. Ici, $\alpha$ est un coefficient d'absorption moyenné tenant compte du recouvrement entre la bande spectrale d'absorption du milieu laser ML et la bande d'émission du concentrateur CL.

L'approche consistant à réduire l'épaisseur du milieu laser jusqu'à la rendre très inférieure à la longueur d'absorption est particulièrement contre-intuitive. En effet, dans le cas d'un pompage conventionnel de la face réceptrice SR du milieu laser par des flashs ou par des diodes lasers (comme dans la figure 2A), se pose le problème de la faible absorption du rayonnement de pompe lors de la réduction de l'épaisseur du milieu laser. Si on considère une plaque laser d'épaisseur $e_L \ll L_{abs}$, comme la lumière de pompe se propage dans l'air avant de rejoindre la plaque laser, elle ne peut pas être piégée dans la plaque laser. Ainsi les rayons se contenteront de traverser la plaque laser dans son épaisseur sans être absorbés de façon significative.

On appelle ici dispositif de pompage en « T », la configuration de l'ensemble de pompage laser (figure 3A) de l'invention qui consiste à pomper de manière transverse une plaque laser ML d'épaisseur $e_L$ inférieure à la longueur d'absorption $L_{abs}$ divisée par 5, préférentiellement divisée par 10, par un concentrateur agencé perpendiculairement et accolé à la grande face (face réceptrice) du milieu laser. L'augmentation de la densité volumique de puissance de pompe est obtenue par réduction de l'épaisseur de la plaque laser ML, imposant des réflexions multiples de la lumière de pompe dans le milieu laser ML, majoritairement entre SR1 et SR2

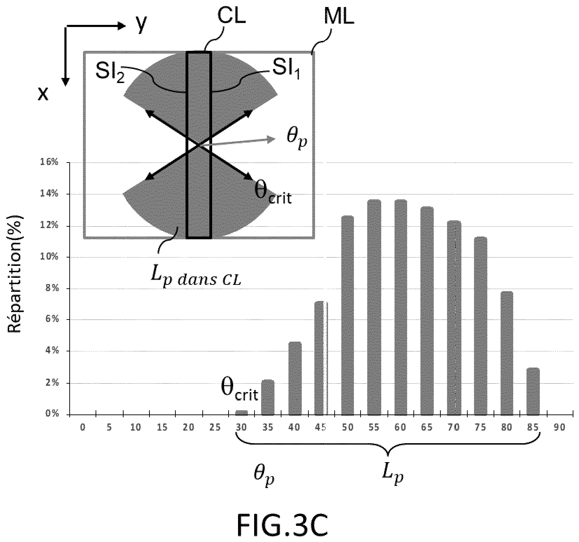

La figure 3C illustre la répartition angulaire des rayons de la portion du rayonnement de fluorescence piégée $L_p$ qui passent dans le milieu laser. Ici, l'angle des rayons $\theta_p$ est repéré par rapport à la normale à la surface $SI_1$. La figure 3C comprend de pus une représentation schématique des rayons piégés de la portion du rayonnement de fluorescence (zone grisée) dans le concentrateur en vue de dessus (plan horizontal $xy$). Dans l'exemple de la figure 3C donné à titre non limitatif, ne correspondant pas à l'invention revendiquée, le milieu laser est une plaque en cristal d'alexandrite ($Cr^{3+}$: $BeAl_2O_4$) d'épaisseur $e_L$=1mm, de longueur $L_L$=50mm et de largeur $w_L$=10mm, avec un dopage de 0,22% correspondant à une longueur d'absorption de 2 cm$^{-1}$. L'indice de la plaque laser est de 1,76, ce qui correspond à un angle $\theta_{crit}$=34,6°angle au-delà duquel les rayons sont réfléchis par RTI sur les faces. Cette plaque laser est pompée par un concentrateur Ce:YAG selon la configuration de la figure 3A en configuration "T". On observe sur la figure 3C qu'il n'existe quasiment aucun rayon entre les incidences 0° et $\theta_{crit}$. En effet, ces rayons, dont l'origine est l'émission isotrope des ions Ce (les luminophores du cristal concentrateur), ne sont pas piégés dans le concentrateur et sont déjà sortis par les deux grands plans SI1 SI2 du concentrateur (voir $L_{out}$ en figure 3B). Ainsi, les rayons se propageant dans la plaque laser ont des angles très importants. De ce fait, l'éclairement de pompe sous le concentrateur décroit très fortement lorsqu'on s'éloigne latéralement du centre du concentrateur à cause de la projection des rayons très inclinés dans le plan vertical comme ce sera montré en figure 6B.

Par ailleurs, les rayons guidées $L_g$ et non guidés $L_{out}$ passant par la face émettrice SE traversent le milieu laser ML avec des angles d'incidence compris entre 0° et $\theta_{crit}$ ne font que traverser la plaque laser. Celle-ci ayant une épaisseur ($e_L$=1mm) très inférieure à la longueur d'absorption ($L_{abs}$=5mm), la contribution à l'absorption par ces rayons sera très faible.

On définit l'efficacité $\eta_{opt}$ du concentrateur comme le rapport entre la puissance lumineuse du rayonnement de fluorescence transmise dans le milieu laser ML et la puissance totale émise par fluorescence. Cette efficacité dépend de nombreux paramètres connus de l'homme du métier : efficacité de photoluminescence, rendement de réflexion totale interne, capacité d'absorption du cristal fluorescent, pertes par propagation dans le cristal de fluorescence, pertes à l'interface entre la face émettrice SE et la face réceptrice SR.

Afin de maximiser le flux couplé dans le milieu laser ML, il est avantageux de limiter le saut d'indice entre le concentrateur et le milieu laser. Aussi selon un mode de réalisation, le concentrateur et le milieu laser sont dans un matériau identique ou un matériau de même indice et de même nature physique afin de pouvoir réaliser un collage par adhésion moléculaire (par exemple Ce :YAG pour le concentrateur et Nd :YAG pour le milieu laser).

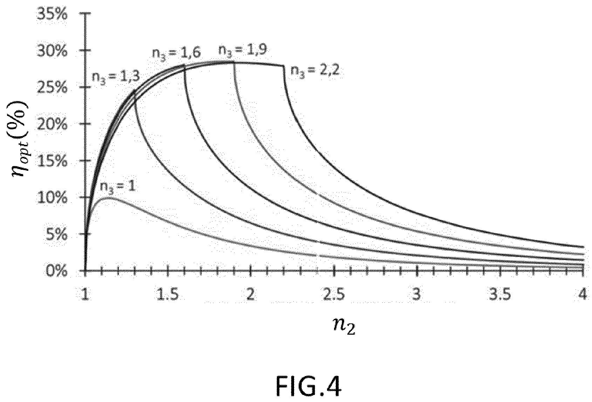

Alternativement, selon un autre mode de réalisation, le concentrateur est collé sur le milieu laser par une colle permettant de limiter le saut d'indice par rapport à un passage dans l'air. La figure 4 représente l'efficacité optique $\eta_{opt}$ du concentrateur en fonction de l'indice du concentrateur ($n_2$) et de l'indice ($n_3$) du milieu dans lequel la face de sortie SE se trouve, c'est-à-dire la colle. Lorsque l'interface entre le concentrateur et la plaque laser est de l'air, seuls les rayons non piégés dans le concentrateur sortent et peuvent être couplés dans la plaque laser. Afin d'améliorer l'efficacité du concentrateur, il est avantageux d'avoir un indice de la colle proche de celui du concentrateur.

Cependant, on note que l'efficacité tend vers un plateau assez rapidement. Alternativement, selon un mode de réalisation, la colle est adaptée de manière à présenter un indice intermédiaire. Par exemple, dans le cas d'un concentrateur en Ce:YAG d'indice $n_2$=1,84 et d'un milieu laser d'indice $n_L$=1,7, on choisit une colle d'indice $n_3$=1,5. Ce mode de réalisation permet de coupler environ 2,5 fois plus de lumière dans le milieu laser ML que s'il y avait un intervalle d'air entre ME et ML.

Ainsi, le système laser de l'invention permet d'obtenir des gains d'amplification élevés tout en réduisant de manière inventive l'épaisseur du milieu laser pompé de manière transverse par un concentrateur augmentant ainsi la densité volumique de puissance de pompe, en tirant profit du guidage par RTI du rayonnement de pompe dans le milieu laser.

Selon un mode de réalisation, un rapport entre la surface de la face réceptrice SR du milieu laser et une surface de la face émettrice du concentrateur SE est supérieur à 5. Cela permet d'avoir un confinement des rayons de pompe dans le plan xy de la plaque laser par absorption. Cela permet aussi d'avoir une dimension horizontale (selon la direction $y$) de faisceau laser conséquente. La dimension verticale du faisceau laser étant fixée par l'épaisseur $e_L$ de la plaque laser, le faisceau laser aura tendance à être elliptique. Cette propriété permet de travailler avec des faisceaux de grande surface tout en assurant un très bon confinement du rayonnement de pompe dans le faisceau laser, contrairement à la configuration classique décrite dans la figure 2B.

Selon un mode de réalisation, un rapport entre une surface de la face d'éclairement du concentrateur SI et une surface de la face émettrice du concentrateur SE étant supérieur ou égal à 100. Cela permet de maximiser le nombre de LED placées sur les faces d'éclairement SI et donc maximiser le puissance de pompe.

**EP 4 128 452 B1**

Le milieu laser et le concentrateur sont réalisés dans des matériaux connus de l'homme de l'art, par exemple comme ceux cités dans le document FR 3045965 B1). A titre non exhaustif, on peut citer comme matériau pour le milieu laser : l'alexandrite ($Cr^{3+}$:$BeAl_2O_4$), le $Nd : YV0_4$, le Cr:LiSAF, le Ti :Sa, le Nd:YAG, l'Er:Yb:verre, l'Er:Yb:YAG, le Tm:YAG, le Cr:ZnSe... A titre non exhaustif, on peut citer comme matériau pour le concentrateur tout matériau de type cristal scintillateur (Ce :YAG, Ce:LuAG, Ce :LiCAF, Ce :YLF, Eu:CsCal, Na :Csl, etc...) ou de type matériau laser cité précédemment.

Cet ensemble de pompage laser est une brique de base pour tout système laser. Il peut être inséré entre des miroirs d'une cavité résonnante pour obtenir un oscillateur laser. Il peut aussi être utilisé directement pour amplifier un faisceau laser effectuant un ou plusieurs passages dans le milieu laser amplificateur : amplificateur à multiples passages géométrique, amplificateur à multiples passages par polarisation (dit régénératif). Dans les deux cas, oscillateur ou amplificateur, le régime de fonctionnement peut être continu, quasi-continu ou impulsionnel avec des impulsions pouvant aller de la seconde à la femtoseconde.

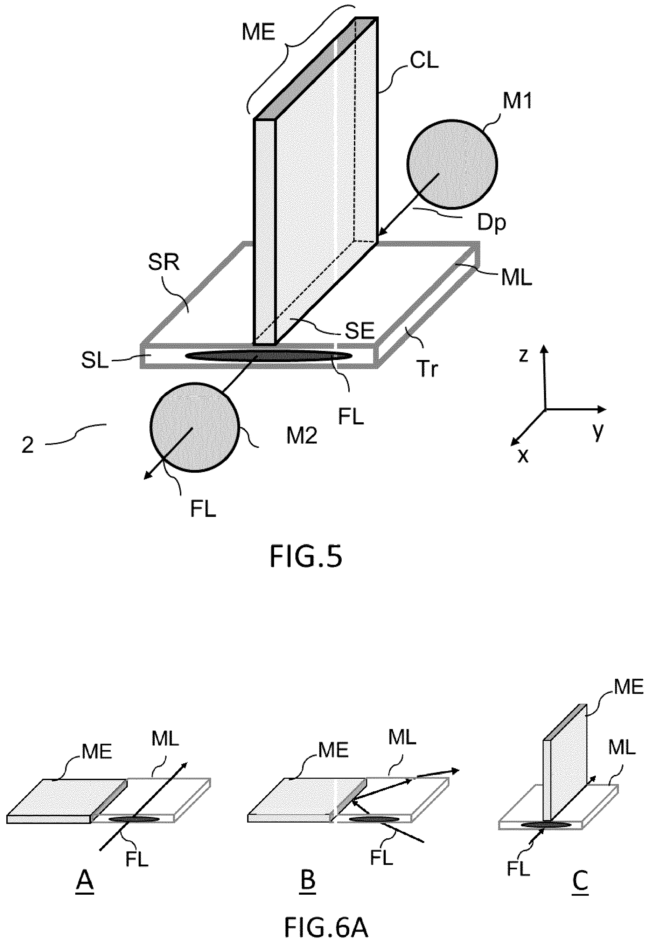

La figure 5 présente un système laser 2 selon un mode de réalisation de l'invention comprenant au moins deux miroirs de cavité M1, M2 de manière à former une cavité laser dans laquelle est disposé l'ensemble laser de la figure 1 et dans lequel se propage un faisceau laser FL. Le faisceau laser se propage dans la cavité et dans le milieu laser selon une direction de propagation Dp, en traversant deux faces opposées dites faces lasers SL situées sur les tranches de la plaque laser. Ces faces lasers présentent chacune des dimensions $e_L \times w_L$, $w_L$ étant dénommée ici dimension transverse (selon la direction $y$) de la face laser. Dans ce mode de réalisation, de manière préférentielle la direction de propagation du faisceau laser Dp dans le milieu laser est parallèle au plan du concentrateur pour que la propagation du faisceau laser s'effectue en dessous du concentrateur. De manière préférentielle, la largeur $w_c$ du concentrateur est égale à une longueur $L_L$ du milieu laser de manière à ce que le faisceau laser soit amplifié pendant la totalité de sa propagation dans le milieu laser.

Selon un mode de réalisation, la dimension horizontale du faisceau laser $w_b$ sur chaque face laser SL est inférieure ou égale à la moitié de la dimension transverse de la face laser, telle que $w_b \leq w_L/2$. La dimension verticale du faisceau laser $w_a$ sur chaque face laser SL est inférieure ou égale à la moitié de la dimension verticale (selon la direction $z$) de la face laser, telle que $w_a \leq e_L/2$. Ces conditions sont nécessaires pour éviter la diffraction du faisceau laser FL par les bords de la plaque laser ML.

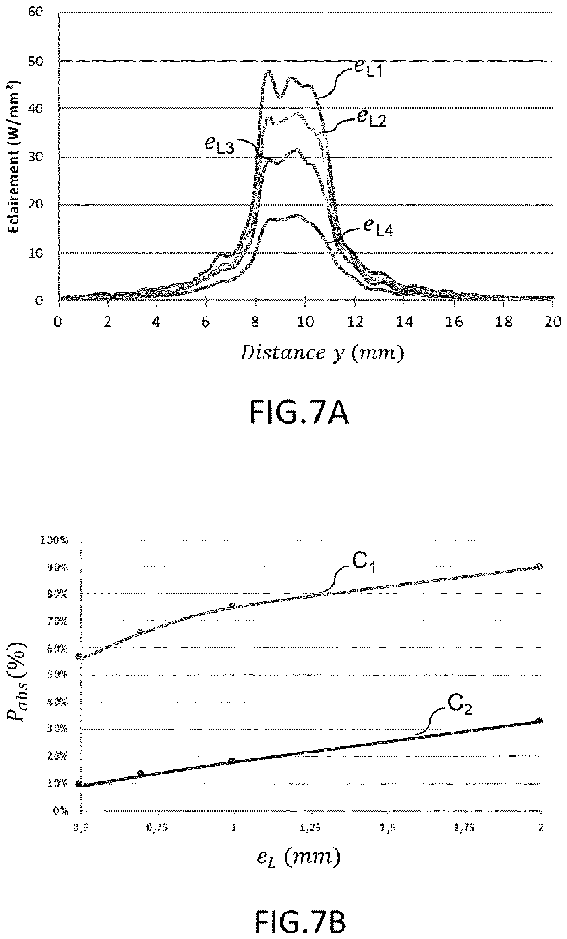

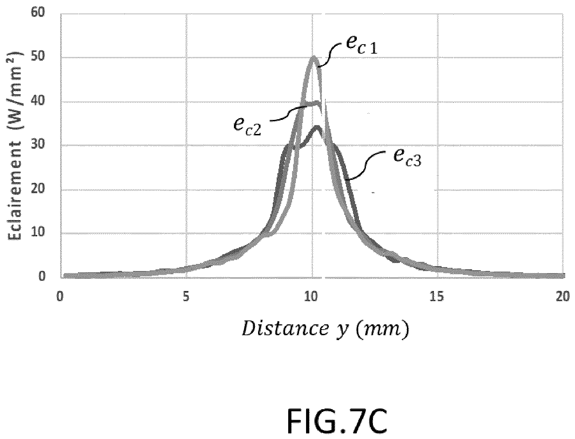

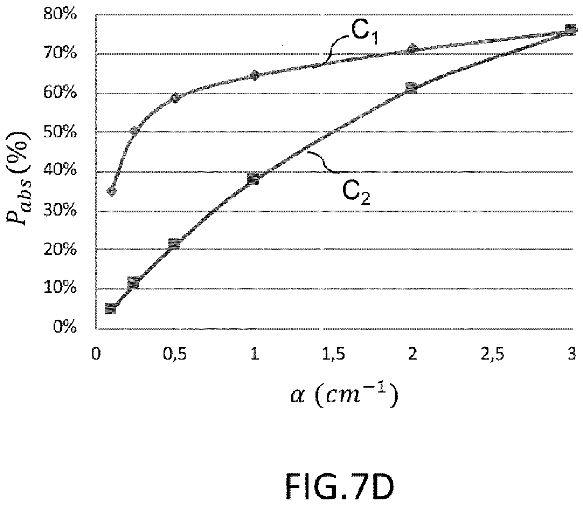

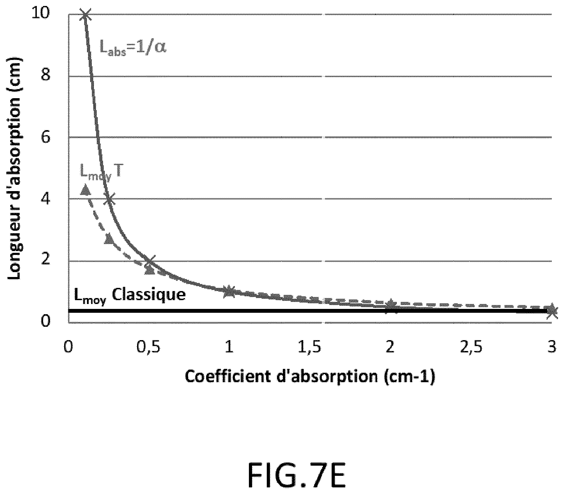

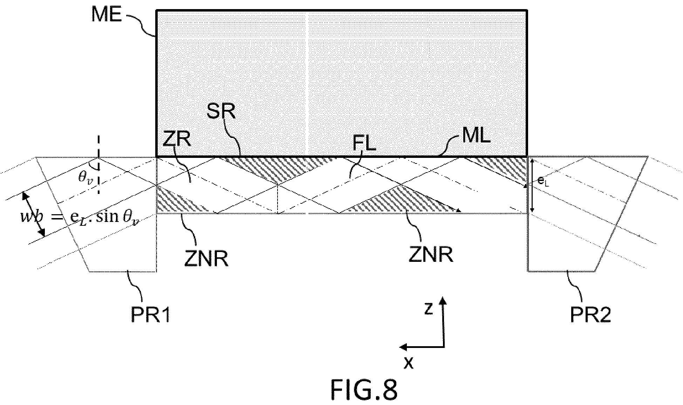

Dans la suite, les figures 6 et 7 sont conçues pour comprendre la pertinence de l'invention par rapport à des configurations classiques. Les figures 8 à 14 présentent d'autres agencements pour des systèmes laser (oscillateur laser ou amplificateurs lasers) basés sur l'invention dans la perspective d'atteindre une plus haute énergie de faisceau.

Les figures 6A-6C présentent une comparaison de différents agencements de module d'émission ME sur des plaques lasers ML illustrant la supériorité de l'agencement de l'invention. La configuration A est celle d'un pompage coplanaire, c'est-à-dire un concentrateur accolé à une tranche de la plaque laser, et avec un faisceau laser parallèle à la face émettrice du concentrateur. La configuration B correspond à un pompage coplanaire avec un faisceau laser en incidence rasante sur la tranche sur laquelle du milieu laser sur laquelle est accolé le concentrateur. Dans les configurations A et B, le milieu laser est adapté au concentrateur, c'est-à-dire que l'épaisseur de la plaque est égale à celle du concentrateur et la longueur du milieu laser est égale à la largeur du concentrateur. La configuration C est celle d'une mode de réalisation de l'invention, c'est-à-dire celle d'un pompage en T sur le centre d'un milieu laser avec un faisceau laser parallèle au plan du concentrateur.

Il faut noter que la configuration en incidence rasante B n'est possible que s'il existe une différence d'indice significative entre le concentrateur et le milieu laser permettant la réflexion totale interne. Dans le cas d'un collage entre les deux milieux avec une colle d'indice n=1,5 et d'un milieu laser d'indice n=1,7 (pour l'alexandrite), l'angle de réflexion totale interne est de 62°. Le faisceau laser doit donc avoir une incidence supérieure à cet angle au niveau du concentrateur.

Toutes les configurations nécessitent l'utilisation d'un faisceau laser de section adaptée à la géométrique de la "plaque" laser. Compte-tenu des limites imposées par la diffraction, la taille du faisceau doit être limitée à la moitié de la taille du cristal laser, dans le plan transverse à l'axe de propagation du laser : on a alors un faisceau laser de dimension $w_a \times w_b$ avec $w_a=e_L/2$ et $w_b=w_L/2$ selon les directions z et y respectivement. Les calculs des figures 6B et 6C sont, à titre d'exemple non limitatif, ne correspondant pas à l'invention revendiquée, réalisées sur un milieu laser en alexandrite d'épaisseur $e_L = 1mm$, de longueur $L_L = 50mm$ et de largeur $w_L = 10\ mm$ présentant un dopage de 0.22% en ions $Cr^{3+}$. Afin de simplifier les calculs, on suppose que le faisceau signal a une section rectangulaire (en réalité, celle-ci est elliptique). Le concentrateur est en Ce:YAG. Le coefficient d'absorption maximal de l'alexandrite pour le spectre d'un concentrateur en Ce:YAG (550-650 nm) est de 2 $cm^{-1}$. Dans les trois configurations, le concentrateur émet une même puissance de pompe.

La figure 6B permet de comparer l'éclairement du rayonnement de pompe obtenu dans la plaque laser pour les configurations classiques A,B (courbe $E_A$) et pour la configuration de pompage en T, C (courbe $E_C$), à l'aide des simulations par un logiciel de tracés de rayons. Il est intéressant de noter que la répartition de l'éclairement de pompe est très différente. Dans le cas du pompage coplanaire (configuration A), la décroissance de l'éclairement de pompe se fait avec une valeur de 3 $cm^{-1}$, dans le cas du pompage selon l'invention (configuration C), la décroissance vaut 9 $cm^{-1}$. Il faut d'abord constater que ces deux valeurs sont différentes du coefficient d'absorption du matériau laser (2 $cm^{-1}$). Cet effet

vient du fait que les rayons de pompe ne sont pas tous dans une seule direction : de nombreuses directions sont possibles du fait de l'émission isotrope dans le concentrateur (émission spontanée). La différence entre les deux configurations peut s'expliquer par la nature des rayons de pompe qui sont absorbés dans la plaque. Dans le cas coplanaire, les rayons absorbés se répartissent à partir de l'incidence nulle (correspondant à la propagation dans le plan des plaques et sur un axe perpendiculaire à la face de sortie). Dans le cas du pompage en T, les rayons absorbés dans la plaque laser correspondent uniquement aux rayons piégés comme illustré en figure 3C.

Le graphe de gauche de la figure 6C présente le gain moyenné $G_0$ sur la section transverse du faisceau laser alors que le graphe de droite présente le recouvrement $R_{p/s}$ entre le faisceau laser et le rayonnement de pompe. Ces calculs sont réalisées pour chaque configuration et pour deux largeurs de face laser différentes, $w_L$ = 10mm et $w_L$ = 20mm. Ici, le calcul du gain prend en compte des pertes passives du cristal d'alexandrite pour s'approcher d'une situation réelle (coefficient de pertes estimé à $7.10^{-3}$cm$^{-1}$). Le paramètre variable choisi en abscisse est le coefficient d'absorption du cristal qui est lié au dopage du milieu laser en ions $Cr^{3+}$ et qui influe directement sur le gain. Ici la section du faisceau est fixée à la moitié des dimensions de la plaque laser : $w_a$ = 500 $\mu$m et $w_b$ = 5 mm.

Le graphe de gauche de la figure 6C précise que le gain maximal en configuration A est le plus faible. Il correspond à une valeur de $\alpha$ proche de 2 cm$^{-1}$ ce qui correspond à une longueur d'absorption de 5 mm, comme prévu par les calculs en figure 2A en faisant d=$w_b$. Le gain supérieur en configuration B par rapport à la configuration C peut s'expliquer par le mauvais recouvrement entre le volume de pompe et le faisceau laser dans le cas du pompage en T présenté ici. En effet, le faisceau laser a une extension spatiale plus importante ($w_b$ =5mm) que la zone de gain (voir figure 6B). En revanche, dans la configuration B, l'intégralité du faisceau va se réfléchir par RTI sur la tranche au contact de la surface émettrice SE du concentrateur, bénéficiant ainsi du gain maximum sur toute la section du faisceau et donc d'un bon recouvrement entre la zone pompée et le faisceau laser.

Concernant le recouvrement $R_{p/s}$ entre le faisceau de pompe et le faisceau laser (graphe de droite de la figure 6C), le pompage en T (configuration C) est bien meilleur que les autres configurations. En effet, dans la configuration de l'invention, toute la zone pompée située sous le concentrateur peut être utilisée par le faisceau laser. Le recouvrement tend vers une valeur de 50%. Cette limite supérieure est liée au fait que la dimension verticale du faisceau laser ne peut pas être plus supérieure à la moitié de l'épaisseur de la plaque laser ($w_a$=$e_L$/2) compte tenu de la limite imposée par la diffraction.

Ainsi, le pompage en T peut être vu comme un "intermédiaire" en terme de gain entre une configuration de pompage coplanaire avec faisceau parallèle à SE (configuration A) et une configuration de pompage coplanaire avec incidence rasante (configuration B) qui nécessite de contrôler l'angle sur le faisceau laser. De plus le pompage en T a un avantage très net sur le recouvrement, qui est un paramètre critique pour permettre une amplification avec un bon rendement et ainsi obtenir un amplificateur laser générant ou amplifiant un faisceau laser FL de forte énergie.

La perspective de montée en énergie nécessite d'augmenter la surface du faisceau afin de ne pas se heurter au seuil de dommage optique de la face d'entrée ($e_L$ $w_L$) du milieu laser. Les graphes de la figure 6C présentent comment ces trois configurations de pompage réagissent à l'augmentation de surface de la plaque laser. Ici on compare deux configurations où la largeur de la plaque laser est doublée de $w_L$ = 10mm à $w_L$ = 20mm. Dans les deux cas, le concentrateur reste le même, avec la même puissance de pompage et la même épaisseur de plaque laser. Le faisceau laser est adapté à la plaque laser : $w_b$=5 mm dans le premier cas et $w_b$=10 mm dans le deuxième cas, $w_a$ restant inchangé.

L'effet de l'augmentation de la largeur de la plaque laser est peu important sur le recouvrement (figure 6C à droite). En revanche il est très dommageable sur le gain (figure 6C à gauche) du fait de la baisse d'éclairement de pompe entraînée par le doublement du volume pompé. Dans la perspective d'augmenter l'énergie du faisceau laser (et donc sa surface lors de sa traversée du milieu laser afin de tenir compte des seuils de dommage), la modularité du pompage en T très avantageuse, comme illustrée dans les figures 8 à 14.

Les figures 7A à 7D illustrent la modularité des performances du système laser présenté figure 5 en fonction de différents paramètres de la plaque laser ML : l'épaisseur de la plaque laser ML (figure 7A et 7B), l'épaisseur du concentrateur CL (figure 7C), et le coefficient d'absorption de la plaque laser ML (figure 7D). Dans le mode de réalisation de ces figures, le milieu laser est identique à celui du mode de réalisation des figures 6A-6C à l'exception qu'il est à présent de largeur $w_L$=20mm et de longueur $L_L$=50mm, le concentrateur étant de largeur $w_c$=$L_L$. Ces valeurs sont choisies à titre d'exemple et ne sont pas limitatives.

La figure 7A présente l'évolution de l'éclairement sous le concentrateur selon la direction transverse (selon y) en fonction de l'épaisseur $e_L$ de la plaque laser. Les courbes el1 à el4 correspondent respectivement à une épaisseur de 0.5mm, 0.7mm, 1mm, 2mm. On constate que plus l'épaisseur de la plaque est faible et plus l'éclairement est important : ceci est dû aux réflexions multiples sur les faces SR qui confinent d'autant plus les rayons de pompe que les faces sont proches l'une de l'autre. On remarque que pour une épaisseur de plaque passant de $e_L$ = 2mm à $e_L$ = 1$mm$ = $L_{abs}$/5, l'éclairement sous le concentrateur est quasiment doublé, illustrant concrètement l'avantage majeur du pompage en T. Selon l'invention telle que revendiquée, afin d'obtenir un éclairement maximal sous le concentrateur (environ 45 W/mm$^2$), l'épaisseur de la plaque laser est inférieure ou égale à $L_{abs}$/10, c'est-à-dire $e_L$ = 0.5$mm$ ici. De plus, il est intéressant de noter que les flancs de la zone éclairée sont plus raides pour des épaisseurs de plaque plus faibles : ceci peut s'expliquer par la proximité de la face de sortie du concentrateur par rapport au centre de la plaque laser. Les rayons de pompe ont moins d'espace pour s'éloigner de la zone pompée si la plaque laser est plus fine. Dans tous les cas, les rayons restent confinés sous le concentrateur du fait des angles élevés des rayons piégés (figure 3C).

La figure 7B montre l'évolution de la puissance de pompe absorbée dans la plaque laser $P_{abs}$ en fonction de l'épaisseur $e_L$ de la plaque laser pour la configuration en T (courbe C1) et pour une configuration de pompage classique dans laquelle tous les rayons du concentrateur traversent simplement la plaque laser (courbe C2) sans y être piégés. Comme attendu, l'absorption évolue peu dans la configuration en T grâce aux rayons piégés (courbe C1). En comparaison, si les rayons ne faisaient que traverser la plaque (courbe C2), la puissance absorbée serait beaucoup plus faible (de 3 à 6 fois plus faible selon l'épaisseur de la plaque). La puissance absorbée dans le cas du pompage en T est beaucoup plus tolérante à la variation de l'épaisseur de la plaque laser : la puissance absorbée est réduite d'un facteur 1,6 si la plaque passe de $e_L$=2mm à $e_L$=0,5mm pour un pompage en T alors que la puissance absorbée serait réduite d'un facteur 3,5 pour un pompage classique. Cette modularité de l'invention à la réduction de l'épaisseur du milieu laser rapport à un pompage classique est particulièrement contre-intuitive.

La figure 7C montre l'évolution de l'éclairement vu par le faisceau laser FL en fonction de la distance, pour 3 valeurs différentes de l'épaisseur $e_c$ du concentrateur CL. Les courbes ec1 à ec3 correspondent respectivement à des épaisseurs de 1mm, 2mm et 3mm. On constate que plus l'épaisseur du concentrateur augmente, plus l'éclairement baisse. L'éclairement est relativement homogène sur toute l'étendue du concentrateur.

Il est intéressant de noter que les deux épaisseurs $e_L$ et $e_c$ sont indépendantes dans le cas du pompage en T. Elles peuvent être choisies avec des valeurs très différentes (par exemple un facteur 6 comme montré sur la figure 7A courbe $e_{L1}$) en conservant une valeur d'éclairement proche du maximum d'une configuration classique en pompage coplanaire (voir figure 6B). Cette modularité sans perte d'éclairement est un autre avantage de la configuration de l'ensemble laser de l'invention qui n'est pas possible sur des configurations en pompage coplanaire où les deux plaques doivent avoir des épaisseurs semblables pour que l'éclairement soit maximal.

La figure 7D représente l'évolution de la puissance de pompe absorbée dans la plaque laser en fonction du coefficient d'absorption pour la configuration en T (courbe C1) et dans une configuration de pompage classique où tous les rayons du concentrateur traversent la plaque laser sans piégeage (rayons collimatés pour simplifier). On observe que la puissance absorbée varie beaucoup moins vite en fonction de l'absorption dans le cas de la configuration en T que dans le cas d'un faisceau de pompe aux rayons non piégés. Cet effet est lié au piégeage des rayons de pompe à l'intérieur de la plaque laser. Ceci implique une plus grande tolérance de la configuration en T à l'absorption du milieu laser par rapport à la configuration de pompage classique.

Pour comprendre plus précisément cet effet, on définit la distance moyenne parcourue $L_{moy}$ par un rayon de pompe dans la plaque laser. La figure 7E compare cette valeur dans une configuration de pompage en T et dans une configuration de pompage classique sans rayons piégés. Dans une configuration classique, la longueur moyenne correspond à la longueur de propagation dans le milieu laser. Comme les rayons traversent simplement la plaque dont l'épaisseur $e_L$ est ici choisie plus petite que la longueur d'absorption $L_{abs}$ : $L_{moy}$ est constante de l'ordre de $e_L$. Dans le cas du pompage en T, les rayons étant piégés dans la plaque laser, la distance parcourue serait infinie si l'absorption était nulle. Du fait de l'absorption, $L_{moy}$ est variable et s'adapte à $L_{abs}$ car les rayons piégés sont absorbés lorsqu'ils ont parcourus dans le milieu laser ML une distance de l'ordre de la longueur d'absorption $L_{abs}$. Ce point est très important pour s'adapter aux dopages classiques des matériaux laser. Par exemple, les cristaux d'alexandrite utilisés dans les exemples des figures 6A à 7D étaient dopés à 0,22% (coefficient d'absorption de $\alpha = 2cm^{-1}$ pour un concentrateur en Ce:YAG). Or, le dopage standard pour les cristaux d'alexandrite les plus vendus est de 0,13% (coefficient d'absorption de $\alpha = 1.2cm^{-1}$ pour un concentrateur en Ce:YAG). Le dispositif du pompage en T pourra facilement s'adapter à ce dopage tout en s'assurant une bonne absorption de la puissance de pompe (-65% pour la configuration en T contre -45% pour la configuration classique, voir figure 7D) ce qui permettra de réduire de coût des plaques laser. De même, le pompage en T pourra fonctionner avec des matériaux qu'il n'est pas possible de doper fortement, comme par exemple le saphir dopé au titane ou des verres dopés.

La figure 8 illustre un autre mode de réalisation de l'invention, dans lequel le système laser comprend en outre un premier et un deuxième de prisme de couplage PR1 et PR2 accolés respectivement à une face laser. Les deux prismes sont configurés pour dévier le faisceau laser FL de manière à ce que celui-ci soit guidé par réflexion totale interne dans le milieu laser ML sur la face réceptrice SR et la face opposée à la face réceptrice avec un angle d'incidence $\theta_v$ sur ces deux faces parallèles. Ce mode de réalisation permet de dépasser la limite de recouvrement de 50% entre le faisceau laser et le rayonnement de pompe imposé par la diffraction (voir figure 6C) et permet d'atteindre un recouvrement de 75% selon le plan *xz*. Le calcul de ce recouvrement est obtenu en faisant le ratio entre la surface claire ZR qui correspondent à l'aire du trajet du faisceau laser dans la plaque laser et la surface totale de la plaque ZR+ZNR.

Un autre avantage de ce mode de réalisation est qu'il permet l'augmentation de la taille du faisceau dans le plan vertical d'un facteur $2sin\theta_v$ ce qui permet d'augmenter l'énergie du faisceau se propageant dans le milieu laser sans atteindre le seuil de dommage sur la face d'entrée du milieu laser. Une dimension du profil du faisceau vaut alors $w_a = e_L sin\theta_v$ et non $w_a = e_L/2$ comme précédemment. Dans le cas d'une plaque ML en alexandrite collée à ME par une colle d'indice 1,5, $\theta_v$=62°, ce qui porte $w_a$ à une valeur de 0,88 $e_L$, quasiment doublée par rapport à une configuration de passage direct du faisceau laser dans le milieu laser ML.

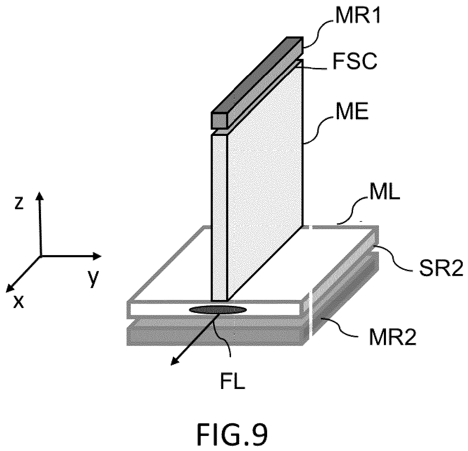

La figure 9 illustre un autre mode de réalisation de l'invention, dans lequel le système laser comprend en outre au moins un premier miroir dit de recyclage MR1 accolé à la face de sortie du concentrateur FSC opposée à ladite face émettrice et/ou un deuxième miroir dit de recyclage MR2 accolé à une face du milieu laser SR2 opposée à la face réceptrice du milieu laser. Le premier miroir MR1 permet de recycler les rayons de pompe sortant par la face de sortie du concentrateur FSC dans la plaque laser. A titre d'exemple, pour un concentrateur en Ce:YAG de longueur $L_c$=200mm, ce miroir MR1 permet de gagner un facteur 1,5 sur l'éclairement en sortie du concentrateur. Le deuxième miroir de recyclage MR2 permet de rediriger dans la plaque laser les rayons de pompe non piégés sortant par la face SR2. A titre d'exemple, un miroir 2 sur un système avec $e_L$=1mm, $e_c$=1mm et une absorption de 2 cm$^{-1}$ permet de faire passer l'éclairement sous le concentrateur de 64W/mm$^2$ à 73W/mm$^2$ et fait passer l'absorption de la pompe dans la plaque laser de 63% à 77%.

Selon une variante du mode de réalisation de la figure 9, l'ensemble comprend de plus les prismes de couplages PR1 et PR2. Dans un exemple donné à titre non limitatif, on présente dans la suite des amplificateurs laser capables de délivrer des faisceaux d'une énergie de 100 mJ. le milieu laser ML est une plaque de $e_L$ = 500 $\mu m$ pour une longueur de $L_L$ = 50 $mm$ avec une longueur d'absorption associé au concentrateur de $L_{abs}$ = 10 $mm$. Avec un angle d'incidence $\theta_v$ = 65° sur les grandes faces de la plaque laser), la taille du faisceau dans le plan vertical sera de $e_l sin$(65°) = 450 $\mu m$. Une densité limite de 3J/cm$^2$ est fixée afin de ne pas dépasser le seuil de dommage. Pour respecter cette densité d'énergie limite, une énergie de 100 mJ sur un faisceau rectangulaire de surface $w_a \times w_b$ impliquera d'utiliser une taille de faisceau dans le plan horizontal de $w_b$ = 7 $mm$. Cette valeur permet de fixer la largeur de la plaque laser : $w_L = 2w_b$ = 14 $mm$.

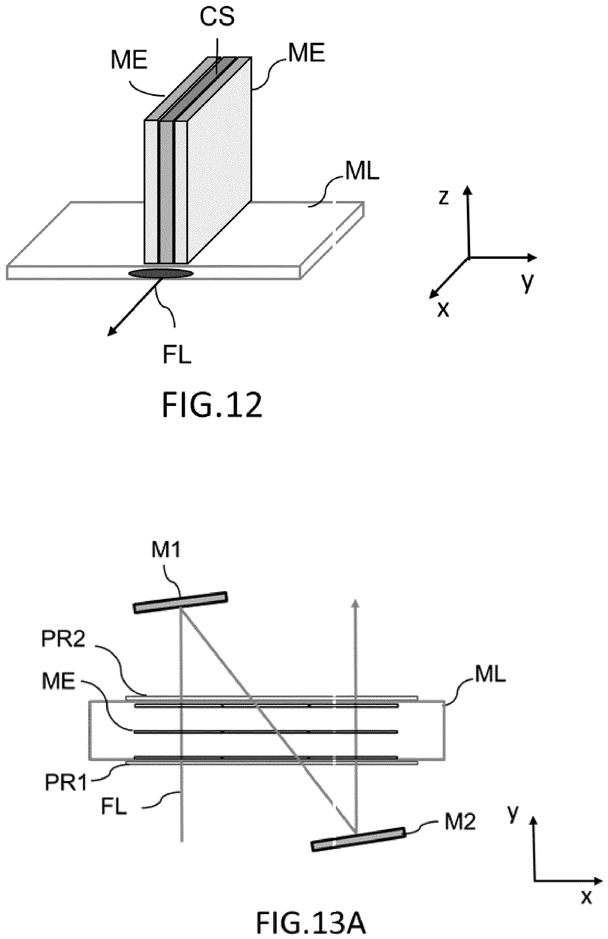

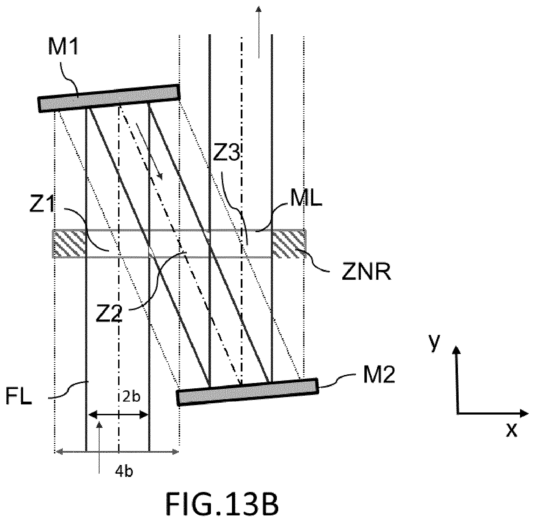

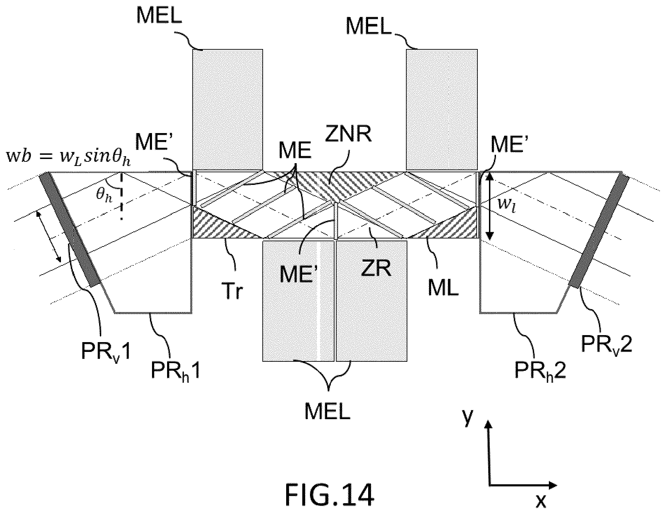

On définit le taux de remplissage de la plaque laser par le ratio entre le volume du faisceau laser dans la plaque laser sur le volume de la plaque laser. Compte tenu des approches précédentes, le taux de remplissage vaut $R_{plaque}$ = 0.5 * 0,75 =0,38 en tenant compte de la dimension du faisceau dans le plan horizontal et de sa propagation particulière dans le plan vertical. Cette grandeur est importante dans une perspective de montée en énergie avec des faisceaux de grande surface transverse : plus le faisceau laser sera grand et plus la plaque laser devra être de taille importante. Les matériaux laser ayant un coût important, il est important de savoir remplir au mieux le volume du milieu laser avec le faisceau laser. On verra dans les configurations des figures 13 et 14 comment augmenter ce taux de remplissage en utilisant la modularité du pompage en T.

Compte tenu de la taille horizontale $w_b$ du faisceau, il faut choisir un concentrateur très épais ($e_c$=3mm) afin d'éviter un gain trop localisé selon y qui pourrait déformer le faisceau laser. Prendre un concentrateur plus épais aurait pour conséquence une forte augmentation du coût du concentrateur sans bénéfice direct sur les performances (mis à part l'homogénéité du pompage).

Le tableau ci-dessous présente les résultats des simulations concernant différents paramètres dans une perspective de réaliser des amplificateurs laser délivrant une énergie de 100 mJ. Trois configurations de la variante du mode de réalisation de la figure 9 sont comparées en choisissant deux épaisseurs de plaques (0,5 mm et 1 mm) et deux puissances émises par les LED : 2,5 W et 1 W. Ce choix de deux puissances est suggéré par la cadence maximale admissible par les LED. Avec une puissance de 2,5 W, les effets thermiques existant dans les LED limitent la cadence de fonctionnement à 100 Hz. En revanche, avec une puissance de 1 W par LED, les LED peuvent fonctionner en régime continu. Afin de limiter la puissance thermique à évacuer, la cadence des LED est limitée à 1 kHz ce qui va correspondre à une puissance moyenne de pompage de 2,9 kW avec environ 6 kW de puissance moyenne thermique à évacuer. L'énergie stockée dans la plaque laser est égale à la puissance absorbée dans la plaque laser multipliée par le temps de vie du milieu laser. Dans le cas d'un cristal d'alexandrite chauffé à 80°, le temps de vie vaut 150 $\mu$s. L'énergie stockée utilisable reportée dans le tableau correspond aux zones où passe le faisceau laser : elle est liée au recouvrement entre la pompe et le faisceau laser $R_{p/s}$.

| | | Configuration 1 : Plaque laser épaisseur 0,5mm | Configuration 2 : Plaque laser épaisseur 1mm 2,5W/LED | Configuration 3 : Plaque laser épaisseur 1mm 1W/LED |
|---|---|---|---|---|
| Dimensions | Concentrateur | Lc=200mm, wc=50mm, ec=3mm | Lc=200mm, wc=120mm, ec=3mm | Lc=200mm, wc=120mm, ec=3mm |
| | Plaque laser | LL=50mm, wL=14mm, eL=0,5mm | LL=120mm, wL=7mm, eL=1mm | LL=120mm, wL=7mm, eL=1mm |
| | Faisceau | wa=0,45mm, wb=7mm | wa-0,9mm, wb=3,5mm | wa=0,9mm, wb=3,5mm |

(suite)

| | | Configuration 1 : Plaque laser épaisseur 0,5mm | Configuration 2 : Plaque laser épaisseur 1mm 2,5W/LED | Configuration 3 : Plaque laser épaisseur 1mm 1W/LED |
|---|---|---|---|---|
| LEDs | Puissance par LED | 2,5W | 2,5W | 1W |
| | Nombre de LEDs | 8000 | 19200 | 19200 |
| | Durée impulsions de pompage | 150 μs | 150 μs | 150 μs |
| | Cadence maximale | 100 Hz | 100 Hz | 1 kHz |
| Performances | Rplaque | 38% | 38% | 38% |
| | G0 | 1,48 | 2,04 | 1,26 |
| | Estockée | 0,48 J | 2,03 J | 0,81 J |

Pour la configuration N°1 (plaque d'épaisseur $e_L$=0,5 mm), le gain $G_0$ calculé est satisfaisant pour réaliser un amplificateur à multipassages de type "régénératif". Avec un rendement d'extraction de l'énergie stockée classiquement supérieur à 20%, le niveau de la centaine de millijoules est accessible avec ce dispositif.

Pour la configuration N°2, le doublement d'épaisseur (passage à $e_L$=1mm) limite l'éclairement de pompe comme vu précédemment. Plusieurs paramètres vont être utilisés pour compenser cet effet qui aurait pour conséquence de réduire le gain :

- la longueur de la plaque laser est augmentée de 50 mm à 120 mm, ce qui a pour conséquence d'augmenter le nombre de LED d'un facteur 2,4 et d'amplifier le faisceau laser sur une plus grande longueur.

- le faisceau est plus petit horizontalement ($w_b$=3,5mm) et le concentrateur a une épaisseur très proche ($e_c$=3mm) de la taille du faisceau. Ceci permet au gain linéique d'être quasiment à la valeur maximale sur toute la section du faisceau, contrairement à la configuration N°1.

L'énergie stockée dans la configuration N°2 est beaucoup plus importante que l'énergie qu'il est possible d'émettre sans endommager le cristal. Ce point limite fortement l'efficacité de l'amplificateur. Une autre façon d'aborder le problème est d'augmenter la cadence de fonctionnement comme dans la configuration N°3 afin d'obtenir une source laser de forte énergie émettant des impulsions avec une fréquence de répétition atteignant 1 kHz. L'idée dans la configuration 3 est de sacrifier une partie de l'énergie stockée et du gain pour monter en cadence. Dans ce cas, la valeur du gain (1,26) reste acceptable et un rendement de l'ordre de 10-15% (lié au plus faible gain de l'amplificateur) amènerait l'énergie en sortie au niveau souhaité de la centaine de mJ.

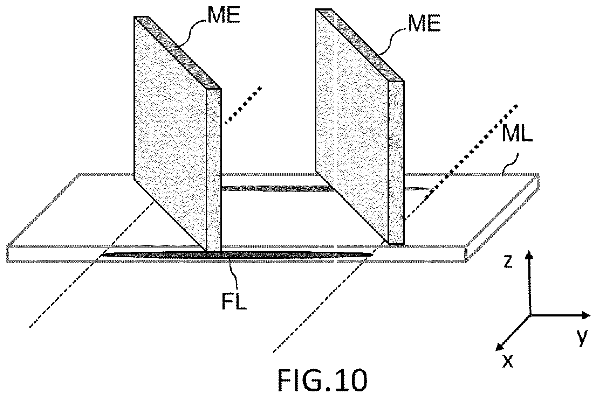

Selon d'autres modes de réalisation illustré en figures 10-14, le système laser laser de l'invention comprend une pluralité de module d'émission ME, accolées la face réceptrice SR du milieu laser. L'utilisation de plusieurs modules d'émission permet d'augmenter l'énergie du faisceau amplifié, en augmentant la surface du faisceau laser et en augmentant la puissance de pompage. De manière préférentielle, les modules d'émissions sont identiques afin de diminuer leur complexité de fabrication et leur coût. Il faut noter que les modes de réalisation illustrés en figures 10-14 sont compatibles avec l'utilisation des prismes de couplages PR1 et PR2 du mode de réalisation de la figure 8 et des miroirs de flux MR1 et MR2 du mode de réalisation de la figure 9.

Dans le mode de réalisation illustré en figure 10, l'ensemble laser comprend deux modules d'émission parallèles entre eux et placés en vis-à-vis et formant un angle avec la direction de propagation du faisceau laser. Compte tenu de la modularité du pompage en T, cet angle peut être choisi librement entre 0° et 90° :

- Un angle de 0° (plan du concentrateur CL parallèle à la direction du faisceau laser comme sur fig 5) permet de coupler la lumière de pompe vers le faisceau laser sur une grande longueur et donc assure un gain important. La taille $w_b$ du faisceau laser dans le plan de la plaque laser est cependant limitée (voir fig 6B ou 7A ou 7C) par la zone éclairée dans la plaque laser.

- Un angle de 90° (plan du concentrateur CL perpendiculaire à la direction du faisceau laser) permet travailler avec des faisceaux laser de grande taille $w_b$ ($w_b$ de l'ordre de $w_c$). En revanche, le gain est limité dans cette configuration car la longueur de propagation "sous le concentrateur" est limitée à $e_c$.

- Un angle intermédiaire permet de faire un compromis entre la taille du faisceau $w_b$ et le gain obtenu sur le faisceau. La combinaison de plusieurs concentrateurs inclinés comme sur la figure 10 est une solution complémentaire pour augmenter la taille du faisceau.

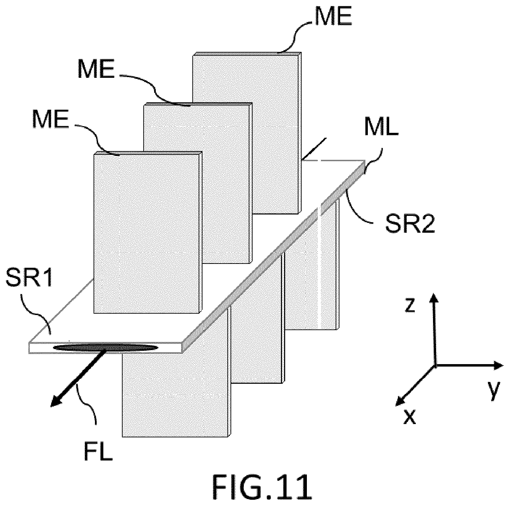

Alternativement, selon un autre mode de réalisation, l'ensemble laser comprend plus de deux modules d'émissions parallèles entre eux et placés en vis-à-vis et formant un angle avec la direction de propagation du faisceau laser Ainsi, il est possible d'obtenir un éclairement homogène sur un faisceau de grande largeur et sur une longueur importante. Dans le mode de réalisation de la figure 11, l'ensemble laser comprend une première pluralité de modules d'émission, parallèles entre eux, placés en vis-à-vis et accolés à une première face réceptrice SR1 du milieu laser. L'espacement entre les concentrateurs est lié aux contraintes mécaniques d'encombrement des LED qui tapissent leurs grandes faces. De plus, l'ensemble laser comprend une deuxième pluralité de modules d'émission, parallèles entre eux, placés en vis-à-vis et accolés à une deuxième face réceptrice SR2 du milieu laser. Dans l'exemple de la figure 11 donné à titre non limitatif, la première pluralité et la deuxième pluralité comprend trois modules d'émission ME. Les modules de la première pluralité et de la deuxième pluralité sont en outre sensiblement parallèles entre eux et la direction de propagation du faisceau laser Dp est perpendiculaire aux modules d'émission. Ce mode de réalisation permet de pomper le milieu laser en mettant à profit les deux faces réceptrices SR1 et SR2. Préférentiellement, les modules de la première pluralité et de la deuxième pluralité étant agencés en quinconce afin de répartir au mieux l'éclairement de pompe dans le milieu laser.

Dans le mode de réalisation de la figure 12, on sacrifie l'une des grandes face d'un module d'émission pour permettre un refroidissement par un système appelé CS. Cette configuration est importante pour maitriser l'élévation de température si ME fonctionne en régime continu. Le nombre de LED est divisé par deux par rapport à un ME qui serait pompé des deux côtés. Afin de compenser cette perte, la figure 12 montre qu'on peut mutualiser CS pour un autre ME, placé de l'autre côté de CS. Cet ensemble ME+CS+ME peut alors devenir un nouvel ensemble de pompage orientable à façon par rapport au faisceau laser. CS doit être défini pour éviter de frustrer la réflexion totale interne des concentrateurs. Il peut être un bloc de refroidissement métallique de surface polie. Il peut être en matériau transparent, d'indice très bas, avec un poli optique, par exemple $CaF_2$ (n=1,4) dont la conductivité thermique est importante. Dans ce dernier cas, une partie de la lumière des deux concentrateurs sera couplée par l'intermédiaire de CS. La surface éclairée sur la plaque ML pourra gagner en homogénéité par ce moyen.

Dans le mode de réalisation des figures 13A et 13B, le faisceau laser est replié par deux miroirs M1 et M2 afin de se propager dans une pluralité de régions différentes Z1, Z2 et Z3 du milieu laser. De plus, la pluralité de modules d'émission ME est disposée au-dessus de chaque région Z1, Z2 et Z3. De manière préférentielle, ce mode de réalisation utilise les prismes de couplage PR1 et PR2 du mode de réalisation de la figure 9 afin de guider en RTI le faisceau laser FL sur la face réceptrice et sa face opposée. Dans cette géométrie, le taux de remplissage du milieu laser ($R_{plaque}$) peut être augmenté par rapport à celui de la figure 9. Ce mode de réalisation permet d'atteindre un faisceau laser d'énergie 1 J.

Avec une énergie de 1 J, le seuil de dommage optique impose un faisceau de taille horizontale de wb=35 mm et de dimension verticale wa=0,9mm pour limiter la densité d'énergie à 3 J/cm². La plaque laser a une épaisseur $e_L$ de 1mm. Elle utilise des prismes de couplage PR1, PR2 guidant le faisceau laser FL en RTI avec un angle d'incidence $\theta_v = 65°$. Dans un exemple donnée à titre non limitatif, le milieu laser en alexandrite possède les dimensions suivante : $L_L$=140 mm, $w_L$=23 mm et $e_L$=1 mm. Les concentrateurs sont utilisés avec leur largeur ($w_c$) perpendiculaire au faisceau laser se propageant selon la direction y. Ceci permet d'assurer un pompage très homogène sur toute la section du faisceau. Ce point est critique car les faisceaux de grande taille sont très sensibles aux défauts. Neufs modules d'émission de largeur $w_c$=35mm et de longueur 200 mm sont placés sur la plaque laser, trois pour chaque zone. Il est entendu que le nombre et le placement des modules d'émission seront adaptés lors d'un changement de la dimension la plaque laser ML.

La figure 13B illustre plus précisément comment le faisceau laser est adapté au milieu laser pour limiter les effets de diffraction tout en maximisant le recouvrement entre le volume du faisceau laser dans le milieu et le volume total du milieu laser. Les bords du milieu laser sont toujours placés à une valeur double de la taille du faisceau dans un plan donné. Le taux de remplissage, $R_{plaque}$ vaut ici 0,56, bien meilleur que dans le mode de réalisation de la figure 9. Avec des modules d'émission en Ce:YAG et un module laser en alexandrite, les calculs montre que l'énergie stockée utilisable est de 2,7 J et que le gain de cet amplificateur laser atteint 1,44 lors de la traversée du milieu. Ce gain est suffisant pour un amplificateur régénératif. Une énergie en sortie atteignant le joule est envisageable avec cette configuration.

Dans le mode de réalisation de la figure 14, le principe est de faire propager le faisceau laser par réflexion totale interne dans le milieu laser dans le plan vertical (comme en figure 8) et aussi dans le plan horizontal. Pour cela, deux paires de prismes accolés sont utilisées : PRv1 et PRv2 pour le plan vertical et PRh1 et PRh2 pour le plan horizontal. Dans le plan horizontal, représenté sur la figure 14, les prismes sont adaptés pour dévier le faisceau laser de manière à ce qu'il soit guidé par réflexion totale interne dans le milieu laser ML sur deux tranches Tr de dimensions $e_L \times L_L$ avec un angle d'incidence sur ces faces $\theta_h$. Ainsi, comme expliqué précédemment, il est possible de choisir une dimension horizontale du faisceau laser telle que $w_b \leq w_l sin\theta_h$, préférentiellement telle que $w_b = w_L sin\theta_h$. Dans le plan vertical l'angle d'incidence du faisceau est $\theta_v$. Comme précédemment la taille du faisceau dans le plan vertical est $w_a = e_L sin\theta_v$.

L'ensemble laser comprend un premier ensemble de modules d'émission ME accolées la face réceptrice SR du milieu laser en configuration de pompage en T. De plus, l'ensemble laser comprend un deuxième ensemble de modules d'émission MEL agencés au milieu laser dans le plan horizontal *xy* et accolés auxdites tranches Tr, de manière à réaliser un pompage coplanaire du milieu laser. De manière préférentielle, les modules d'émission du deuxième ensemble sont placés sur lesdites tranches en correspondance de régions de réflexion du faisceau laser guidé dans ledit milieu laser. Cet agencement est avantageux car il permet un recouvrement dans le plan horizontal $R_{xy}$ très élevé entre le faisceau laser en la zone pompée et permet une très forte localisation de l'éclairement à proximité du concentrateur, là où le faisceau se réfléchit.

Dans ce mode de réalisation, le pompage est dit "hybride" car il est réalisé en partie en configuration en T (par le premier ensemble de modules d'émission) et en partie de façon coplanaire (par le deuxième ensemble de modules d'émission MEL).

En supposant les angles $\theta_v$ et $\theta_h$ identiques et égaux à 65°on calcule un taux de remplissage du milieu laser ($R_{plaque}$) égal à 0,56 supérieur aux configurations 1-3 données dans le tableau. Cette valeur d'angle (65°) est bien entendue dépendante du milieu laser et est adaptée en fonction de ce dernier. Il faut cependant noter que dans le cas où les plaques lasers sont biréfringentes, le faisceau laser évoluant selon 4 directions différentes (deux dans le plan vertical et deux dans le plan horizontal), il est nécessaire de corriger des effets de rotation de polarisation par une lame quart d'onde et un double passage du faisceau dans la plaque laser, en revenant exactement sur lui-même.

Dans le mode de réalisation illustré en figure 14, et cela à titre non limitatif, le milieu laser est une plaque laser en alexandrite de $e_L$=2mm, pour une largeur de plaque laser de $w_L$=20 mm, avec une longueur de $L_L$=120mm avec une longueur d'absorption $L_{abs}$ = 10*mm* associée au rayonnement de fluorescence du concentrateur des modules d'émission. Grâce aux prismes PRv1, PRv2, PRh1 et PRh2, le faisceau est de taille $w_a$=1,8mm et $w_b$=18,5mm. Sur la face réceptrice de la plaque laser au-dessus de la direction de propagation du faisceau laser, deux types de module d'émission du premier ensemble sont utilisés : 3 modules d'émission ME' de largeur 10 mm, placés aux endroits où le faisceau se replie sur lui-même et 6 concentrateurs de largeur 20 mm placés sur la surface réceptrice. Les simulations montrent qu'un concentrateur placé sur le dessus (en "T") augmente le gain de 2,1%. Un concentrateur coplanaire de même largeur adapté à la dimension des zones de réflexion sur la tranche augmente le gain de 3,6%. Ces résultats sont cohérents avec les calculs présentés en figure 6C. En tenant compte des pertes dans le milieu lors de la propagation, on obtient un gain total de G0=1,3. L'énergie stockée utilisable est de 2J, un peu plus faible que dans l'exemple des figures 13A et 13B, du fait des dimensions plus réduites du cristal. Il faut noter que ce point pourrait être facilement amélioré par une augmentation de la longueur du cristal en ajoutant un rebond sur la tranche de la plaque laser, ce qui amènerait la longueur du cristal à $L_L$=130mm (réalisable dans des cristaux d'alexandrite), le gain G0 à 1,46 et l'énergie stockée à 3J. Comme mentionné précédemment, cette valeur de gain est suffisante pour un amplificateur de type "régénératif" multipassages avec des énergies de l'ordre du joule.

Il est intéressant de remarquer que les performances du système laser selon le mode de réalisation de la figure 14 et selon le mode de réalisation des figures 13A et 13B sont assez similaires, malgré une géométrie différente (type de pompage, taille du faisceau laser et épaisseur de plaque). C'est la preuve de la modularité du pompage par concentrateur en T selon l'invention.

Alternativement, selon un autre mode de réalisation, les deux prismes PRh1 et PRh2 peuvent être retirés du montage. Le faisceau laser est alors orienté en incidence rasante dans le plan horizontal (comme en figure 6B). Le pompage hybride permet un bon compromis entre le gain et l'énergie. Cependant, dans cette configuration, le recouvrement $R_{plaque}$ est plus faible et de l'ordre de 0,38.

Bien entendu, les modes de réalisation des figures 8 à 14 peuvent être utilisés de manière équivalente dans un amplificateur laser et dans un oscillateur laser. C'est-à-dire que les systèmes des figures 8 à 14 peuvent être utilisés pour amplifier un faisceau laser généré par un autre laser ou être insérés dans une cavité laser afin de former un oscillateur laser. Dans les deux cas, oscillateur ou amplificateur, le régime de fonctionnement peut être continu, quasi-continu ou impulsionnel avec des impulsions pouvant aller de la seconde à la femtoseconde.

**Revendications**

**1.** Ensemble de pompage laser (1) comprenant :

- un milieu laser (ML) solide parallélépipédique présentant une forme de plaque selon un plan horizontal *(xy)* et une épaisseur $e_L$, ledit milieu laser présentant une bande spectrale d'absorption et un coefficient d'absorption $\alpha$ associé ;

- au moins un module d'émission de lumière (ME) destiné au pompage du milieu laser comprenant :

- une pluralité de diodes électroluminescentes (LED) configurées pour émettre un rayonnement électroluminescent ($L_d$) à une longueur d'onde $\lambda_d$ ;
- un cristal parallélépipédique fluorescent dit concentrateur (CL), présentant une forme de plaque d'épaisseur $e_c$, ledit concentrateur présentant au moins une face d'éclairement ($SI_1$, $SI_2$) illuminée par ledit rayonnement électroluminescent ($L_d$) et étant configuré pour absorber ledit rayonnement électroluminescent ($L_d$) et émettre un rayonnement de fluorescence dans une gamme spectrale présentant un recouvrement avec ladite bande spectrale d'absorption, ledit concentrateur présentant une face émettrice (SE) présentant des dimensions $e_c \times w_c$, $w_c$ étant une largeur du concentrateur;

ledit concentrateur étant en contact optique par ladite face émettrice (SE) à une face réceptrice (SR, SR1, SR2) du milieu laser, ledit concentrateur étant disposé perpendiculairement au milieu laser de telle sorte que la ou les faces d'éclairement ($SI_1$, $SI_2$) soient perpendiculaires à ladite face réceptrice de manière à réaliser un pompage transverse dudit milieu laser,
le contact optique étant adapté pour qu'une portion ($L_g$) dudit rayonnement de fluorescence piégée dans le concentrateur (CL) par réflexion totale interne puisse passer dans le milieu laser (ML) en traversant ladite face émettrice (SE), et être piégée dans le milieu laser ML par réflexion totale interne, l'ensemble de pompage laser (1) étant **caractérisé en ce que** ladite épaisseur $e_L$ du milieu laser étant telle que $e_L \leq L_{abs}/10$ avec $L_{abs} = 1/\alpha$ une longueur d'absorption du milieu laser.

2. Ensemble de pompage laser selon la revendication précédente, dans lequel un rapport entre une surface de la face réceptrice (SR) du milieu laser et une surface de la face émettrice du concentrateur (SE) est supérieur à 5, et dans lequel un rapport entre une surface de la face d'éclairement du concentrateur et une surface de la face émettrice du concentrateur est supérieur ou égal à 100.

3. Ensemble de pompage laser selon l'une quelconque des revendications 1 à 2, comprenant au moins un premier miroir de recyclage (MR1) accolé à une face de sortie du concentrateur (FSC), opposée à ladite face émettrice et/ou un deuxième miroir de recyclage (MR2) accolé à une face du milieu laser (SR2) opposée à ladite face réceptrice.

4. Système laser (2) comprenant l'ensemble de pompage laser selon l'une des revendications 1 à 3 et au moins deux miroirs de cavité (M1, M2) de manière à former une cavité laser dans laquelle est disposée l'ensemble, un faisceau laser (FL) se propageant dans ledit milieu laser selon une direction de propagation (Dp), en traversant deux faces opposées dites faces lasers (SL) présentant chacune des dimensions $e_L \times w_L$, $w_L$ étant dénommé dimension transverse, et au moins un module d'émission de l'ensemble de pompage laser réalisant un pompage transverse du milieu laser.

5. Système laser selon la revendication 4, dans lequel la cavité laser est configurée pour qu'une dimension horizontale du faisceau laser $w_b$ et une dimension verticale $w_a$ sur chaque face laser soit inférieure à, respectivement la moitié de la dimension transverse de la face laser et la moitié de la dimension horizontale de la face laser, telle que $w_b \leq w_L/2$ dans le plan horizontal et $w_a \leq e_L/2$ dans le plan vertical.

6. Système laser selon la revendication précédente, dans lequel la cavité laser est configurée pour que la direction de propagation du faisceau laser (Dp) dans le milieu laser soit parallèle au concentrateur et pour que la propagation du faisceau laser s'effectue en dessous du concentrateur, ladite largeur $w_c$ du concentrateur étant égale à une longueur $L_L$ du milieu laser de manière à ce que le faisceau laser soit amplifié sur la totalité de sa propagation dans le milieu laser.

7. Système laser selon l'une quelconque des revendications 4 à 6, comprenant en outre un premier et un deuxième de prisme de couplage (PR1, PR2) accolés respectivement à une face laser, lesdits prismes étant configurés pour dévier ledit faisceau laser de manière à ce que celui-ci soit guidé par réflexion totale interne dans ledit milieu laser sur la face réceptrice et une face opposée à ladite face réceptrice, la cavité étant adaptée pour qu'une dimension verticale du faisceau laser $w_a$ soit telle que $w_a \leq e_L sin\theta_v$, avec $\theta_v$ un angle d'incidence du faisceau laser sur ladite face réceptrice.

8. Système laser selon l'une quelconque des revendications 4 à 8, comprenant une pluralité de module d'émission accolées la face réceptrice (SR) du milieu laser.

9. Système laser selon la revendication précédente, dans lequel ladite pluralité est constituée d'un premier et d'un deuxième module d'émission disposés côte à côte et sensiblement parallèle entre eux, ledit système comprenant en outre un système de refroidissement (CS) des LED disposé entre le premier et le deuxième module d'émission, le faisceau laser se propageant parallèlement et en dessous des concentrateurs du premier et du deuxième module d'émission, de manière à ce que le faisceau laser soit amplifié dans une région pompée simultanément par le premier et le deuxième module d'émission, le système de refroidissement étant constitué de matériaux métalliques ou de matériaux transparents de qualité optique.

10. Système laser selon la revendication 8, comprenant :

- une première pluralité de modules d'émission, parallèles entre eux, placés en vis-à-vis et accolés à une première face réceptrice (SR1) du milieu laser,
- une deuxième pluralité de modules d'émission, parallèles entre eux, placés en vis-à-vis et accolés à une deuxième face réceptrice (SR2) du milieu laser,
les modules de la première pluralité et de la deuxième pluralité étant en outre sensiblement parallèles entre eux,
la direction de propagation du faisceau laser (Dp) étant perpendiculaire aux modules d'émission,
les modules de la première pluralité et de la deuxième pluralité étant agencés en quinconce.

11. Système laser selon la revendication 4, dans lequel la cavité laser est adaptée pour que le faisceau laser se propage dans une pluralité de régions différentes du milieu laser, une pluralité de modules d'émission identiques étant disposés au-dessus de chaque région.

12. Système laser selon la revendication 4, comprenant :

- un premier et un deuxième prismes accolés à respectivement une face laser, lesdits prismes étant adaptés pour dévier ledit faisceau laser de manière à ce qu'il soit guidé par réflexion totale interne dans ledit milieu laser sur deux faces dite tranches (Tr) de dimensions $e_L \times L_L$ ;
- un premier ensemble de modules d'émission préférentiellement identiques accolées la face réceptrice (SR) du milieu laser ; un deuxième ensemble de modules d'émission (MEL) agencés au milieu laser dans le plan horizontal *(xy)* et accolés auxdites tranches (Tr), de manière à réaliser un pompage coplanaire du milieu laser,
- une dimension horizontale du faisceau laser étant telle que $w_b \leq w_L sin\theta_h$, avec $\theta_h$ un angle d'incidence du faisceau incident sur lesdites tranches laser.

13. Système selon la revendication précédente, dans lequel les modules d'émission du deuxième ensemble sont placés sur lesdites tranches en correspondance de régions de réflexion du faisceau laser guidé dans ledit milieu laser.

14. Amplificateur laser comprenant l'ensemble de pompage laser selon l'une des revendications 1 à 3, au moins un module d'émission de l'ensemble de pompage laser réalisant un pompage transverse du milieu laser, un faisceau laser (FL) étant incident sur ledit amplificateur laser et se propageant dans ledit milieu laser selon une direction de propagation (Dp), en traversant deux faces opposées dites faces lasers (SL) présentant chacune des dimensions $e_L \times w_L$.

**Patentansprüche**

1. Laserpumpanordnung (1), umfassend:

- ein massives quaderförmiges Lasermedium (ML) mit einer Plattenform in einer horizontalen Ebene *(xy)* und einer Dicke $e_L$, wobei das Lasermedium eine spektrale Absorptionsbande und einen zugehörigen Absorptionskoeffizienten $\alpha$ aufweist;
- mindestens ein Lichtemissionsmodul (ME), das zum Pumpen des Lasermediums dient, umfassend:

- eine Vielzahl von Leuchtdioden (LEDs), die so konfiguriert sind, dass sie eine Elektrolumineszenz-Strahlung ($L_d$) mit einer Wellenlänge $\lambda_d$ emittieren;
- einen fluoreszierenden quaderförmigen Kristall, Konzentrator (CL) genannt, der eine Plattenform mit der Dicke $e_c$ aufweist, wobei der Konzentrator mindestens eine Beleuchtungsfläche (SI$_1$, SI$_2$) aufweist, die von der Elektrolumineszenz-Strahlung ($L_d$) beleuchtet wird und so konfiguriert ist, dass sie die Elektrolumineszenz-Strahlung ($L_d$) absorbiert und eine Fluoreszenz-Strahlung in einem Spektralbereich emittiert, der mit der spektralen Absorptionsbande überlappt, wobei der Konzentrator eine Abstrahlungsfläche (SE) mit den

Abmessungen $e_c \times w_c$ aufweist, wobei $w_c$ eine Breite des Konzentrators ist;

wobei der Konzentrator über seine Abstrahlungsfläche (SE) mit einer Empfangsfläche (SR, SR1, SR2) des Lasermediums in optischem Kontakt steht und senkrecht zum Lasermedium angeordnet ist, sodass die Beleuchtungsfläche(n) ($SI_1$, $SI_2$) senkrecht zu der Empfangsfläche stehen, um ein transversales Pumpen des Lasermediums zu erreichen,
wobei der optische Kontakt so ausgelegt ist, dass ein Teil ($L_g$) der im Konzentrator (CL) durch innere Totalreflexion eingeschlossenen Fluoreszenz-Strahlung in das Lasermedium (ML) gelangen kann, indem es die Abstrahlungsfläche (SE) durchquert, und in dem Lasermedium ML durch innere Totalreflexion eingeschlossen wird, wobei die Laserpumpanordnung (1) **dadurch gekennzeichnet ist, dass** die Dicke $e_L$ des Lasermediums derart ist, dass $e_L < L_{abs}/10$, wobei $L_{abs} = 1/\alpha$ eine Absorptionslänge des Lasermediums ist.

2. Laserpumpanordnung nach dem vorstehenden Anspruch, wobei das Verhältnis zwischen dem Flächeninhalt der Empfangsfläche (SR) des Lasermediums und dem Flächeninhalt der Abstrahlungsfläche des Konzentrators (SE) größer als 5 ist und wobei das Verhältnis zwischen dem Flächeninhalt der Beleuchtungsfläche des Konzentrators und dem Flächeninhalt der Abstrahlungsfläche des Konzentrators größer oder gleich 100 ist.

3. Laserpumpanordnung nach einem der Ansprüche 1 bis 2, umfassend mindestens einen ersten Recycling-Spiegel (MR1), der an einer Auslassfläche des Konzentrators (FSC) gegenüber der Abstrahlungsfläche angebracht ist, und/oder einen zweiten Recycling-Spiegel (MR2), der an einer Fläche des Lasermediums (SR2) gegenüber der Empfangsfläche angebracht ist.

4. Lasersystem (2), umfassend die Laserpumpanordnung nach einem der Ansprüche 1 bis 3 und mindestens zwei Resonatorspiegel (M1, M2), sodass ein Laserresonator gebildet wird, in dem die Anordnung angeordnet ist, sodass sich ein Laserstrahl (FL) in dem Lasermedium in einer Ausbreitungsrichtung (Dp) ausbreitet und dabei zwei einander gegenüberliegende Flächen durchquert, die Laserflächen (SL) genannt werden und jeweils die Abmessungen $e_L \times w_L$ aufweisen, wobei $w_L$ als Querabmessung bezeichnet wird, und mindestens ein Emissionsmodul der Laserpumpanordnung, sodass das Lasermedium transversal gepumpt wird.

5. Lasersystem nach Anspruch 4, wobei der Laserresonator so konfiguriert ist, dass eine horizontale Abmessung des Laserstrahls $w_b$ und eine vertikale Abmessung $w_a$ jeder Laserfläche jeweils kleiner als die Hälfte der Querabmessung der Laserfläche bzw. die Hälfte der horizontalen Abmessung der Laserfläche ist, derart, dass $w_b \leq w_L/2$ in der horizontalen Ebene und $w_a \leq e_L/2$ in der vertikalen Ebene gilt.

6. Lasersystem nach dem vorstehenden Anspruch, wobei der Laserresonator so konfiguriert ist, dass die Ausbreitungsrichtung des Laserstrahls (Dp) im Lasermedium parallel zum Konzentrator verläuft und die Ausbreitung des Laserstrahls unterhalb des Konzentrators erfolgt, wobei die Breite $w_c$ des Konzentrators gleich der Länge $L_L$ des Lasermediums ist, sodass der Laserstrahl während seiner gesamten Ausbreitung im Lasermedium verstärkt wird.

7. Lasersystem nach einem der Ansprüche 4 bis 6, ferner umfassend ein erstes und ein zweites Kopplungsprisma (PR1, PR2), die jeweils an einer Laserfläche angebracht sind, wobei die Prismen so konfiguriert sind, dass sie den Laserstrahl ablenken, sodass er durch innere Totalreflexion im Lasermedium auf die Empfangsfläche und eine der Empfangsfläche gegenüberliegende Fläche geführt wird, wobei der Resonator so ausgelegt ist, dass eine vertikale Abmessung des Laserstrahls $w_a$ derart ist, dass $w_a \leq e_L \sin\theta_v$ gilt, wobei $\theta_v$ ein Einfallswinkel des Laserstrahls auf die Empfangsfläche ist.

8. Lasersystem nach einem der Ansprüche 4 bis 8, umfassend eine Vielzahl von Emissionsmodulen, die an der Empfangsfläche (SR) des Lasermediums angebracht sind.

9. Lasersystem nach dem vorstehenden Anspruch, wobei die Vielzahl von einem ersten und einem zweiten Emissionsmodul gebildet wird, die nebeneinander und im Wesentlichen parallel zueinander angeordnet sind, wobei das System ferner ein zwischen dem ersten und dem zweiten Emissionsmodul angeordnetes LED-Kühlsystem (CS) umfasst, wobei sich der Laserstrahl parallel und unterhalb der Konzentratoren des ersten und des zweiten Emissionsmoduls ausbreitet, sodass der Laserstrahl in einem Bereich verstärkt wird, der gleichzeitig vom ersten und vom zweiten Emissionsmodul gepumpt wird, wobei das Kühlsystem aus metallischen Werkstoffen oder transparenten Werkstoffen optischer Qualität gebildet wird.

10. Lasersystem nach Anspruch 8, umfassend:

- eine erste Vielzahl von Emissionsmodulen, die parallel zueinander, einander gegenüberliegend platziert und an einer ersten Empfangsfläche (SR1) des Lasermediums angebracht sind,
- eine zweite Vielzahl von Emissionsmodulen, die parallel zueinander, einander gegenüberliegend platziert und an einer zweiten Empfangsfläche (SR2) des Lasermediums angebracht sind,
wobei die Module der ersten Vielzahl und der zweiten Vielzahl ferner im Wesentlichen parallel zueinander sind,
wobei die Ausbreitungsrichtung des Laserstrahls (Dp) senkrecht zu den Emissionsmodulen verläuft,
wobei die Module der ersten Vielzahl und der zweiten Vielzahl versetzt angeordnet sind.

11. Lasersystem nach Anspruch 4, wobei der Laserresonator so ausgelegt ist, dass sich der Laserstrahl in eine Vielzahl unterschiedlicher Bereiche des Lasermediums ausbreitet, wobei über jedem Bereich eine Vielzahl identischer Emissionsmodule angeordnet ist.

12. Lasersystem nach Anspruch 4, umfassend:

- ein erstes und ein zweites Prisma, die jeweils an einer Laserfläche angebracht sind, wobei die Prismen so ausgelegt sind, dass sie den Laserstrahl so ablenken, dass er durch innere Totalreflexion im Lasermedium auf zwei Flächen, sogenannte Tranchen (Tr), mit den Abmessungen $e_L \times L_L$ geführt wird;
- einen ersten Satz vorzugsweise identischer Emissionsmodule, die an der Empfangsfläche (SR) des Lasermediums angebracht sind; einen zweiten Satz Emissionsmodule (MEL), die am Lasermedium in der horizontalen Ebene *(xy)* angeordnet und an den Tranchen (Tr) angebracht sind, sodass das Lasermedium koplanar gepumpt wird,
- eine horizontale Abmessung des Laserstrahls, derart, dass $w_b \le w_L \sin\theta_h$ gilt, wobei $\theta_h$ ein Einfallswinkel des auf die Tranchen treffenden Laserstrahls ist.

13. System nach dem vorstehenden Anspruch, wobei die Emissionsmodule des zweiten Satzes auf den Tranchen übereinstimmend mit den Reflexionsbereichen des im Lasermedium geführten Laserstrahls platziert sind.

14. Laserverstärker, umfassend die Laserpumpanordnung nach einem der Ansprüche 1 bis 3, wobei mindestens ein Emissionsmodul der Laserpumpanordnung das Lasermedium transversal pumpt, wobei ein Laserstrahl (FL) auf den Laserverstärker auftrifft und sich im Lasermedium in einer Ausbreitungsrichtung (Dp) ausbreitet und dabei zwei einander gegenüberliegende Flächen, die als Laserflächen (SL) bezeichnet werden und jeweils die Abmessungen $e_L \times w_L$ aufweisen, durchquert.

## Claims

1. A laser pumping assembly (1) comprising:

- a parallelepipedal solid laser medium (ML) having the shape of a plate in a horizontal plane *(xy)* and a thickness $e_L$, said laser medium having an absorption spectral band and an associated absorption coefficient $\alpha$;
- at least one light emission module (ME) intended to pump the laser medium, comprising:

- a plurality of light-emitting diodes (LED) configured to emit electroluminescent radiation ($L_d$) at a wavelength $\lambda_d$;
- a fluorescent parallelepipedal crystal called a concentrator (CL), having the shape of a plate of thickness $e_c$, said concentrator having at least one illumination face ($SI_1$, $SI_2$) illuminated by said electroluminescent radiation ($L_d$) and being configured to absorb said electroluminescent radiation ($L_d$) and emit fluorescence radiation in a spectral range exhibiting an overlap with said absorption spectral band, said concentrator having an emitting face (SE) having dimensions $e_c \times w_c$, $w_c$ being a width of the concentrator;

said concentrator being in optical contact, via said emitting face (SE), with a receiving face (SR, SR1, SR2) of the laser medium, said concentrator being arranged perpendicular to the laser medium such that the one or more illumination faces ($SI_1$, $SI_2$) are perpendicular to said receiving face so as to perform transverse pumping of said laser medium,
the optical contact being designed such that a portion ($L_g$) of said fluorescence radiation trapped in the concentrator (CL) by total internal reflection is able to pass into the laser medium (ML) by passing through said emitting face (SE), and be trapped in the laser medium (ML) by total internal reflection,
the laser pumping assembly (1) being **characterized in that** said thickness $e_L$ of the laser medium being such that

$e_L \leq L_{abs}/10$ where $L_{abs} = 1/\alpha$ is an absorption length of the laser medium.

2.  The laser pumping assembly as claimed in the preceding claim, wherein a ratio between a surface area of the receiving face (SR) of the laser medium and a surface area of the emitting face of the concentrator (SE) is greater than 5, and wherein a ratio between a surface area of the illumination face of the concentrator and a surface area of the emitting face of the concentrator is greater than or equal to 100.

3.  The laser pumping assembly as claimed in either one of claims 1 and 2, comprising at least a first recycling mirror (MR1) coupled to an exit face of the concentrator (FSC) opposite said emitting face and/or a second recycling mirror (MR2) coupled to a face of the laser medium (SR2) opposite said receiving face.

4.  A laser system (2) comprising the laser pumping assembly as claimed in one of claims 1 to 3 and at least two cavity mirrors (M1, M2) so as to form a laser cavity in which the assembly is arranged, a laser beam (FL) propagating in said laser medium in a propagation direction (Dp), passing through two opposing faces, called laser faces (SL), each having dimensions $e_L \times w_L$, $w_L$ being called transverse dimension, and at least one emission module of the laser pumping assembly performing transverse pumping of the laser medium.

5.  The laser system as claimed in claim 4, wherein the laser cavity is configured such that a horizontal dimension of the laser beam $w_b$ and a vertical dimension $w_a$ on each laser face is less than, respectively, half the transverse dimension of the laser face and half the horizontal dimension of the laser face, such that $w_b \leq w_L/2$ in the horizontal plane and $w_a \leq e_L/2$ in the vertical plane.

6.  The laser system as claimed in the preceding claim, wherein the laser cavity is configured such that the propagation direction of the laser beam (Dp) in the laser medium is parallel to the concentrator and such that the laser beam propagates below the concentrator, said width $w_c$ of the concentrator being equal to a length $L_L$ of the laser medium such that the laser beam is amplified over all of its propagation in the laser medium.

7.  The laser system as claimed in any one of claims 4 to 6, furthermore comprising a first and a second coupling prism (PR1, PR2) coupled respectively to a laser face, said prisms being configured to deflect said laser beam such that it is guided by total internal reflection in said laser medium onto the receiving face and a face opposite said receiving face, the cavity being designed such that a vertical dimension of the laser beam $w_a$ is such that $w_a \leq e_L \sin\theta_v$, where $\theta_v$ is an angle of incidence of the laser beam on said receiving face.

8.  The laser system as claimed in any one of claims 4 to 8, comprising a plurality of emission modules coupled to the receiving face (SR) of the laser medium.

9.  The laser system as claimed in the preceding claim, wherein said plurality consists of a first and a second emission module arranged side-by-side and substantially parallel to one another, said system furthermore comprising an LED-cooling system (CS) arranged between the first and the second emission module, the laser beam propagating parallel to and below the concentrators of the first and the second emission module, such that the laser beam is amplified in a region pumped simultaneously by the first and the second emission module, the cooling system consisting of metal materials or high-optical-quality transparent materials.

10. The laser system as claimed in claim 8, comprising:

    - a first plurality of emission modules, parallel to one another and placed facing one another and coupled to a first receiving face (SR1) of the laser medium,
    - a second plurality of emission modules, parallel to one another and placed facing one another and coupled to a second receiving face (SR2) of the laser medium,
    the modules of the first plurality and of the second plurality furthermore being substantially parallel to one another, the propagation direction of the laser beam (Dp) being perpendicular to the emission modules, the modules of the first plurality and of the second plurality being arranged in a quincunx.

11. The laser system as claimed in claim 4, wherein the laser cavity is designed such that the laser beam propagates in a plurality of different regions of the laser medium, a plurality of identical emission modules being arranged above each region.

12. The laser system as claimed in claim 4, comprising:

- a first and a second prism coupled respectively to a laser face, said prisms being designed to deflect said laser beam such that it is guided by total internal reflection in said laser medium onto two faces, called edges (Tr), of dimensions $e_L \times L_L$;
- a first set of preferably identical emission modules coupled to the receiving face (SR) of the laser medium; a second set of emission modules (MEL) arranged on the laser medium in the horizontal plane *(xy)* and coupled to said edges (Tr), so as to perform coplanar pumping of the laser medium,
- a horizontal dimension of the laser beam being such that $w_b \leq w_L \sin\theta_h$, where $\theta_h$ is an angle of incidence of the beam incident on said laser edges.

13. The system as claimed in the preceding claim, wherein the emission modules of the second set are placed on said edges in a manner corresponding to regions of reflection of the laser beam guided in said laser medium.

14. A laser amplifier comprising the laser pumping assembly as claimed in one of claims 1 to 3, at least one emission module of the laser pumping assembly performing transverse pumping of the laser medium, a laser beam (FL) being incident on said laser amplifier and propagating in said laser medium in a propagation direction (Dp), passing through two opposing faces, called laser faces (SL), each having dimensions $e_L \times w_L$.

FIG.1A

FIG.1B

FIG.2A

FIG.2B

FIG.3A

FIG.3B

FIG.3C

FIG.4

FIG.5

FIG.6A

FIG.6B

FIG.6C

FIG.7A

FIG.7B

FIG.7C

FIG.7D

FIG.7E

$$wb = e_L . \sin \theta_v$$

FIG.8

EP 4 128 452 B1

FIG.9

34

FIG.10

FIG.11

FIG.12

FIG.13A

FIG.13B

FIG.14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3045965 B1

**Littérature non-brevet citée dans la description**

- **BARBET, ADRIEN et al.** Light-emitting diode pumped luminescent concentrators: a new opportunity for low-cost solid-state lasers.. *Optica*, 2016, vol. 3 (5), 465-468
- **PIERRE PICHON**. Light-emitting diodes: a new paradigm for Ti:sapphire pumping. *OPTICA*, 20 October 2018, vol. 5 (10), 1236
- **PICHON PIERRE et al.** LED-pumped Alexandrite laser oscillator and amplifier. *PROCEEDINGS OF SPIE*, 15 February 2018, vol. 10511, 105111J-105111J